(19)

**Europäisches Patentamt**
**European Patent Office**
**Office européen des brevets**

(11) **EP 3 542 639 B1**

(12) **EUROPEAN PATENT SPECIFICATION**

(45) Date of publication and mention
of the grant of the patent:
**14.06.2023 Bulletin 2023/24**

(21) Application number: **18163002.1**

(22) Date of filing: **21.03.2018**

(51) International Patent Classification (IPC):
**A23K 10/30** *(2016.01)*   **A23K 50/75** *(2016.01)*
**A23K 50/20** *(2016.01)*

(52) Cooperative Patent Classification (CPC):
**A23K 10/30; A23K 50/20; A23K 50/75**

(54) **INGREDIENT FOR ANIMAL FEED, FEED AND A METHOD FOR FEEDING ANIMALS**

INHALTSSTOFF FÜR TIERFUTTER, FUTTER UND VERFAHREN ZUM FÜTTERN VON TIEREN

INGRÉDIENT POUR NOURRITURE POUR ANIMAUX, ALIMENT ET PROCÉDÉ D'ALIMENTATION
D'ANIMAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.09.2019 Bulletin 2019/39**

(73) Proprietor: **Viking Malt Oy
15140 Lahti (FI)**

(72) Inventors:
• **Reinikainen, Pekka
40100 Jyväskylä (FI)**
• **Huttunen, Timo
15950 Lahti (FI)**
• **Apajalahti, Juha
02920 Espoo (FI)**

(74) Representative: **Kolster Oy Ab
(Salmisaarenaukio 1)
P.O. Box 204
00181 Helsinki (FI)**

(56) References cited:
**US-A- 4 251 630     US-A- 6 063 431**

• TIWARI NEHA ET AL: "Effect of different
processing techniques on nutritional
characteristics of oat (Avena sativa) grains and
formulated weaning mixes", JOURNAL OF FOOD
SCIENCE AND TECHNOLOGY, SPRINGER
(INDIA) PRIVATE LTD, INDIA, vol. 51, no. 9, 24
April 2012 (2012-04-24) , pages 2256-2259,
XP035384519, ISSN: 0022-1155, DOI:
10.1007/S13197-012-0694-Z [retrieved on
2012-04-24]
• OKOH P N ET AL: "SOME COMPOSITIONAL
CHANGES IN MALTED SORGHUM (SORGHUM
VULGARE) GRAIN AND ITS VALUE IN BROILER
CHICKEN DIET", JOURNAL OF THE SCIENCE OF
FOOD AND AGRICULTURE, WILEY & SONS,
CHICHESTER, GB, vol. 49, no. 3, 1 January 1989
(1989-01-01), pages 271-279, XP000045415, ISSN:
0022-5142
• D.J. PEER ET AL: "Feeding value of
hydroponically sprouted barley for poultry and
pigs", ANIMAL FEED SCIENCE AND
TECHNOLOGY, vol. 13, no. 3-4, 1 December 1985
(1985-12-01), pages 183-190, XP055503387,
AMSTERDAM, NL ISSN: 0377-8401, DOI:
10.1016/0377-8401(85)90021-5

**Description**

FIELD OF THE INVENTION

The present invention belongs to the fields of farming and animal feed. The present invention relates to a feed for animals comprising germinated and dried grains.

BACKGROUND

In the nutrition of animals, promoting health and welfare of an animal through feeding are increasing in their importance. As an example, people are interested in the impacts of feed to the intestinal microbiota and intestinal health affecting physiology and health of an animal in many ways.

Feed industry has been applying carbohydrate digesting enzymes in industrial feed for nearly 30 years. Enzymes for the hydrolysis of non-starch polysaccharides are widely used in feed industry for improvement of feed utilisation and alleviation of digestive disorders in production animals. Initially enzymes were used with highly viscous grains, such as wheat and barley, to alleviate the digestive disorders they caused for the production animals.

Malting is the process of converting cereal grains into malt, e.g. for use in brewing, distilling or in foods. The main purpose of the malting is to provide physical, chemical and biochemical changes in the kernel, thus producing enzymes which are capable of decomposing the starch of the kernel. The germination process converts part of the starch, the seed's stored energy, into simpler sugars used in its initial growing stage. The conversion of starch to sugar is accomplished by enzymes that the seed produces during this process.

Malting process typically comprises at least three stages, namely immersion, germination and drying steps. Firstly, the cereal to be used is purified and screened, and it is then steeped in water to provide a suitable moisture content (ca. 45%). When the kernels are suitably moist, they are germinated usually for about six days. Germination of kernels requires a moisture content of at least about 37%. After germination the malt is dried, and the moisture content thereby decreases to about 4-10%. After drying the rootlets are removed.

Malting grains express many enzyme activities which are specifically targeted to hydrolyse plant macromolecules. Enzyme activities expressed are a cocktail of amylases, proteases, glucanases, xylanases, phytases and many others, most likely even uncharacterized enzymes, which are important for the seed germination and nutrition of the seedling. Pratt et al. (US 4,251,630) disclose malted barley having an alpha-1,6-hydrolase activity of at least 55 units per gram of malt which is used for producing alcoholic beverages and maltose syrup.

Unprocessed or untreated grains have been fed to animals for a long time. Also, it is well known that malted grains have been fed to animals. As an example Wettstein et al. (2000, PNAS vol. 97, no. 25, 13512-13517) describe feeding of transgenic barley (line 5607) malt to chickens and shows e.g. weight gain equivalent to corn diets. In this study also Golden promise malt increased weight gain of chickens compared to normal barley diet. Tiwari and Awasthi (J Food Sci Technol 2014, 51(9): 2256-2259) disclose malted oat flour having alpha amylase activity 720.0 units ($\mu$g/ml) which is used for producing a weaning mix. Bae et al (US 6,036,431) disclose germinated and dried cereals having amylase activity of more than 100 units/g for the manufacture of feed compositions for hens, pigs and dogs. Okoh et al. (Journal of the Science of Food and Agriculture 1989, 49(3): 271-279) disclose germinated and dried sorghum grains used as chicken feed.

Intestinal infection called coccidiosis is one of the main problems for the international poultry industry, especially in the broiler sector. Coccidiosis of chicken is caused by microparasites of genus Eimeria which infect the intestinal epithelium. Coccidia have complex life cycles, involving multiplication in the intestinal epithelium, and transmission between chicks as drought-resistant oocysts via air and dust. Each oocyst carries eight unicellular sporozoites which, when ingested by a chicken, are released in the gut lumen and multiply within intestinal epithelial cells. New generation of oocysts is released on the sixth day post-infection, after which the chick generally recovers from the disease and gets an immunity against the specific Eimeria species.

The action of the coccidian parasites to the intestinal epithelium decreases the rate of nutrient absorption, damages the epithelial barrier function against pathogenic bacteria, and greatly increases the susceptibility to secondary infections. Necrotic enteritis, which is the most severe bacterial infection associated with coccidiosis, causes significant economic losses to poultry producers each year.

Coccidiostats, which as compounds are similar to antibiotics, are used in practically all broiler diets worldwide because of the abundance of coccidia. The European Union has discussed about the possibility to ban the use of coccidiostats in broiler diets, like it previously prohibited the use of feed antibiotics. Therefore, non-antibiotic feed additives which could reduce the negative effects of coccidiosis would be of high value to the international poultry industry.

To summarize, improvements and developments of animal feed are warranted for providing cost-effective feed as well as increasing the welfare (e.g. intestinal welfare or welfare of the digestive tract) of animals. Furthermore, a need remains for effective and natural ingredients, which have positive environmental impacts such as reduced feed consumption or decreased excrement output, when used in animal feed.

SUMMARY

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

BRIEF DESCRIPTION OF THE DRAWINGS

In the following the invention will be described in greater detail by means of specific embodiments with reference to the attached drawings.

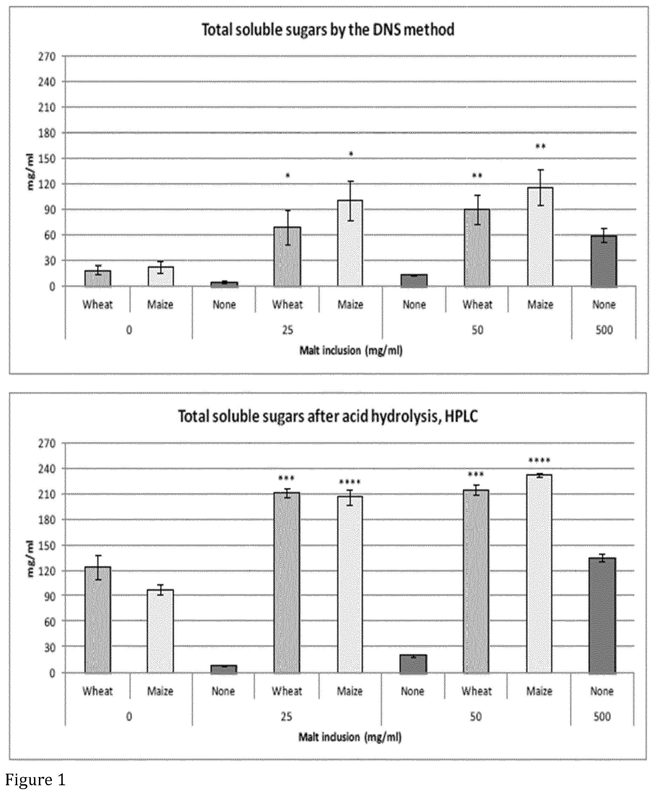

**Figure 1** shows the effect of malt inclusion on sugar solubilisation from destarched wheat and maize. Sugar solubilisation was analysed by DNS (upper panel) and HPLC after acid hydrolysis (lower panel). Columns marked with "Wheat" or "Maize" show sugar solubilisation at different levels of malt inclusion from wheat and maize, respectively. Columns marked with "None" show the release of sugars at different levels of malt alone, in the absence of wheat or maize. Bars in columns indicate the standard error of the mean between the replicate vessels. Asterisks indicate the statistical significance of the difference to the control in the absence of malt as defined in examples.

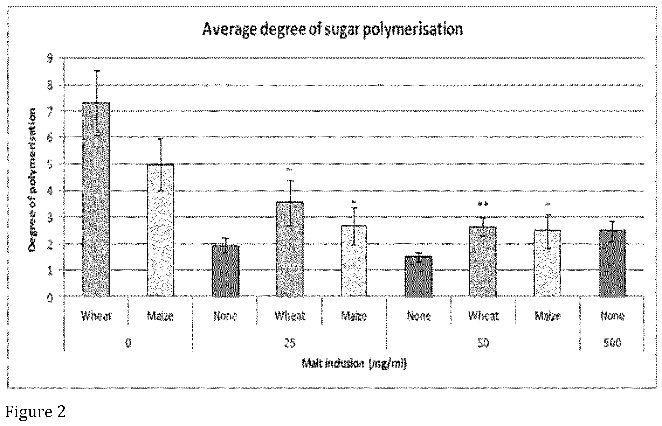

**Figure 2** shows the effect of malt inclusion on the degree of polymerisation of soluble sugars released from destarched wheat or maize. Columns marked with "Wheat" or "Maize" show the degree of polymerisation at different levels of malt inclusion from wheat or maize, respectively. Columns marked with "None" show the degree of sugar polymerisation at different levels of malt alone, in the absence of wheat or maize. Bars in columns indicate the standard error of the mean between the replicate vessels. Asterisks indicate the statistical significance of the difference to the control in the absence of malt.

**Figures 3a and 3b** show the effect of malt inclusion on the solubilisation of glucose, xylose and arabinose from destarched wheat and maize. Columns marked with "Wheat" or "Maize" show sugar solubilisation at different levels of malt inclusion from wheat or maize, respectively. Columns marked with "None" show the release of sugars at different levels of malt alone, in the absence of wheat or maize. Bars in columns indicate the standard error of the mean between the replicate vessels. Asterisks indicate the statistical significance of the difference to the control in the absence of malt.

**Figure 4** shows mean weight gain in the three diet groups. The dashed line represents the average weight gain of Ross broilers, according to Aviagen Ltd which is the breeder and supplier of the grandparent lines of this broiler breed.

**Figure 5** shows average feed consumption per pen for the entire study period (mean ± SE).

**Figure 6** shows feed conversion ratio during the starter diet period (days 1-17; mean ± SE).

**Figure 7** shows feed conversion ratio during the grower diet period (days 17-29; mean ± SE).

**Figure 8** shows feed conversion ratio during the entire study period (days 1-29; mean ± SE).

**Figure 9** shows mortality (%) during the entire study period (days 1-29; mean ± SE).

**Figure 10** shows *Streptococci* numbers in ileal samples on day 29 as measured by qPCR. The bars are standard errors of the mean of 14 or 16 replicate samples.

**Figure 11** shows *Lactobacilli* numbers in ileal samples on day 29 as measured by qPCR. The bars are standard errors of the mean of 14 or 16 replicate samples.

**Figure 12** shows *Enterococci* numbers in ileal samples on day 29 as measured by qPCR. The bars are standard errors of the mean of 14 or 16 replicate samples.

**Figure 13** shows Bifidobacterial numbers in caecal samples on day 17 as measured by qPCR. The bars are standard errors of the mean of 14 or 16 replicate samples.

**Figure 14** shows *Coriobacteriaceae* numbers in caecal samples day 17 as measured by qPCR. The bars are standard errors of the mean of 14 or 16 replicate samples.

**Figure 15** shows the absolute concentration of acetic acid in ileal samples on day 29. The bars are standard errors of the mean of 14 or 16 replicate samples.

**Figure 16** shows the absolute concentration of lactic acid in ileal samples on day 29. The bars are standard errors of the mean of 14 or 16 replicate samples.

**Figure 17** shows the absolute concentration of total VFAs in caecal samples on day 17. The bars are standard errors of the mean of 14 or 16 replicate samples.

**Figure 18** shows the absolute concentration of acetic acid in caecal samples on day 17. The bars are standard errors of the mean of 14 or 16 replicate samples.

**Figure 19** shows the absolute concentration of lactic acid in caecal samples on day 17. The bars are standard errors of the mean of 14 or 16 replicate samples.

**Figure 20** shows the absolute concentration of butyric acid in caecal samples on day 29. The bars are standard errors of the mean of 14 or 16 replicate samples.

**Figure 21** shows the absolute concentration of lactic acid in caecal samples on day 29. The bars are standard errors of the mean of 14 or 16 replicate samples.

**Figures 22A-C** show the effect of malt on feed consumption of broiler chickens. Panels A to C show the feed consumption/pen during the starter diet period 0-14 days, early grower diet period 14-21 days and the whole trial period of 0-35 days. The asterisks show the significance of difference to control by Dunnett's test and the error bars indicate SEM.

**Figures 23A-B** show the effect of malt on feed conversion ratio. Panels A and B show the feed conversion ratio for the periods 14-21 days and 0-35 days, respectively. Panel C shows the FCR from the previous trial during the whole trial period 0-35 days. The asterisks show the significance of difference to control by Dunnett's test and the error bars indicate SEM.

**Figure 24** shows **the** effect of malt on mortality %. Figure 24 shows the mortality % during the period 0-14 days. The asterisks show the significance of difference to control by Dunnett's test and the error bars indicate SEM.

**Figures 25A-B** show the effect of malt on mortality-corrected feed conversion efficiency. Panel A and B show the mortality corrected FCR during the growth periods 14-21 and 0-35 days, respectively. The asterisks show the significance of difference to control by Dunnett's test and the error bars indicate SEM.

**Figures 26A-C** show the effect of Barley Malt on the body weight of broiler chickens. Panels A, B and C show the body weight on days 13, 21 and 35, respectively. Error bars show SEM and asterisks the significance of the difference to negative controls.

**Figures 27A-D** show the effect of Barley Malt on the body weight gain of broiler chickens. Panels A, B, C and D show the body weight gain during the growth periods 0-13, 13-21, 21-35 and 0-35 days, respectively. Error bars show SEM and asterisks the significance of the difference to negative controls.

**Figures 28A-D** show the Effect of Barley Malt on feed consumption of broiler chickens. Panels A, B, C and D show the feed consumption during the growth periods 0-13, 13-21, 21-35 and 0-35 days, respectively. Error bars show SEM and asterisks the significance of the difference to negative controls.

**Figures 29A-D** show the effect of Barley Malt on feed conversion ratio of broiler chickens. Panels A, B, C and D show the feed conversion efficiency during the growth periods 0-13,13-21, 21-35 and 0-35 days, respectively. Error bars show SEM and asterisks the significance of the difference to negative controls.

**Figure 30** shows the effect of Barley Malt on mortality of broiler chickens. Figure 30 shows the mortality during the whole growth period 0-35 days. Error bars show between the replicates.

**Figures 31A-D** show the effect of Barley Malt on feed conversion ratio corrected for mortality of broiler chickens. Panels A, B, C and D show the mortality corrected feed conversion efficiency during the growth periods 0-13, 13-21, 21-35 and 0-35 days, respectively. Error bars show SEM and asterisks the significance of the difference to negative controls.

**Figure 32** shows the effect of Barley Malt on jejunal NE-lesions of broiler chickens. Figure 32 shows the jejunal lesion scores on day 21. Error bars show SEM.

**Figure 33** shows total bacterial numbers in ileal samples at day 21 sampling point as measured by qPCR. The bars are standard errors of the mean of replicate samples and asterisks the statistical difference to the Negative CTRL Diet with t-test.

**Figure 34.** Numbers of eimeria in ileal samples at day 21 sampling point as measured by qPCR. The bars are standard errors of the mean of replicate samples and asterisks the statistical difference to the Negative CTRL diet 1 with t-test.

**Figure 35.** Numbers of Cl. perfringens in ileal samples at day 21 sampling point as measured by qPCR. The bars are standard errors of the mean of replicate samples and asterisks the statistical difference to the Negative CTRL diet 1 with t-test.

**Figure 36** shows obtained diet digestibility averages of dry matter, organic matter and crude protein.

**Figure 37** shows obtained diet digestibility averages for ash, crude fiber, NDF and ADF.

**Figure 38** shows glucose responses for the experimental diets.

**Figure 39** shows insulin response for the experimental diets.

**Figure 40** shows blood lactate response for the experimental diets.

DETAILED DESCRIPTION OF EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising", "containing" and "including" should be understood as not limiting the described embodiments to consist of only those features that have been mentioned and such embodiments may contain also features/structures that have not been specifically mentioned.

The present invention provides a feed for animals to solve the problems of animal feed, namely lack of effective natural feed causing well-being.

The invention is based on the idea of using specific germinated and dried grains in the animal feed. Indeed, by the present invention it is possible to achieve effects including improving intestinal health of poultry during and/or after Eimeria infection, reducing *Cl. perfringens* infection severity in poultry and improving performance of performance of poultry under conditions of necrotic enteritis challenge. It is also disclosed that effects including but not limited to reduced feed consumption, improved feed conversion rate, weight increase, decreased faeces output, intestinal welfare or welfare of the digestive tract, reduced *Cl. perfringens* infection severity during the acute phase of necrotic enteritis and improved performance of animals can be achieved. These effects are achieved by using specific germinated and dried grains in the feed. Use of only small amounts of the ingredient lowers the production costs of animal feed and therefore also has positive environmental effects due to smaller production volumes. Also, the taste or palatability of the feed achieved by the present invention is very good and the feed does not cause digestive problems. It is an object of the present invention to provide a natural ingredient or component for feed making it possible to cost effectively achieve effective results in animals compared to present feeding methods.

The present invention provides very effective components, which can be utilized in animal feed without any industrially produced feed enzymes. Most industrial enzymes are recombinant forms produced in bacteria and fungi. According to the present invention it is possible to reach more natural feed products by avoiding these industrial enzymes or by decreasing the number of enzymes used as feed additives.

The present invention provides a means to alleviate the negative effects of *Eimeria maxima* -induced coccidiosis to the performance of broiler chicks, by using specific germinated and dried grains in the animal feed to inhibit *Cl. perfringens* infection during the severe phase of necrotic enteritis. The invention shifts microbial fermentation to a beneficial direction: In small intestine, the numbers of lactic acid producing bacteria were increased and the fermentation was directed to heterofermentative direction, which has previously been found to indicate good animal performance.

In detail, the present invention is based on a specific component(s) or ingredient(s), namely germinated and dried grains having alpha-amylase activity of at least 60 DU/g d.w. and its use in animal feed. Indeed, carefully selected and produced malt products provide significant benefits when included in animal diets. By the present invention high quality feed for animals is guaranteed. The present invention also makes it possible to utilize local grains and sustainable methods for production of specific germinated and dried grains for animal feed.

In summary, the present invention provides a simple and natural component or ingredient for animal feed. Controlling feeding of animals is important for maintaining the health of animals and for satisfactory growth or production of e.g. meat.

The method of the present disclosure may be utilized for optimizing feeding of animals.

**Grains and malting**

In one embodiment of the invention grains used for germination and drying have the following grain quality:

protein content % (% mass/mass on dry basis)     9 - 16

Grains suitable for germinating and drying according to the present invention include any grains such as barley, wheat, oat or rye. Furthermore, the grains of the present invention may include cereal grains from one or more cereals selected from the group consisting of barley, wheat, rye, oat. Suitable varieties include but are not limited to e.g. barley variety Polartop, Repekka, Vipekka, Popekka.

The grains used for germination and drying according to the present invention may be unpeeled because malting tests have shown that peeled or broken kernels exhibit low germination. In some embodiments there may be a combination of peeled and unpeeled grains in the feed.

Malting has improving effects on activities of many enzymes in the grain. Also, malted grains are of importance due to other kind of health components, both known and unknown. In a specific embodiment of the invention malted grains have specific characteristics which can be achieved by utilizing specific grains. In another embodiment a combination of specific grains and a specific malting process cause the desired product.

The germinated and dried grains of the present invention have alpha-amylase activity of at least 60 DU/g d.w., specifically 70 to 200 DU/g d.w., more specifically 80 to 150 DU/g d.w. Alpha-amylase enzymes (1,4-alpha-D-glucanohydrolase, E.C.3.2.1.1) hydrolyse alpha bonds of large, alpha-linked polysaccharides, such as starch and glycogen. To be exact, alpha-amylases catalyze the hydrolysis of $\alpha$-1,4 glucosidic linkages in polysaccharides of three or more $\alpha$-1,4-linked D-glucose units to produce maltose and larger oligosaccharides (e.g. glucose). Alpha-amylase is present in seeds containing starch as a food reserve. There are several methods for determination of alpha-amylase activity (i.e. ability to endohydrolyse 1,4-$\alpha$-D-glucosidic linkages of polysaccharides) and they are known to a person skilled in the art. Alpha-amylase activity in grain may be measured by e.g. the Hagberg-Perten Falling Number, a test to assess sprout damages or the Phadebas method. The Phadebas amylase test is used as a qualitative and quantitative test within many industries, such as detergents, various flour, grain, and malt foods, and forensic biology. According to the present invention alpha-amylase activity has been measured according to Analytica-EBC, 4.13, Alfa-Amylase Content of Malt.

Diastatic power refers to the starch hydrolysing power of the germinated and dried grains. As used herein "diastatic power" refers to ability of the germinated and dried grains to break down starches into fermentable sugars. The term "diastatic" refers to "diastase" enzymes. There are two "diastase" enzymes, the first is alpha-amylase and the second is beta-amylase. Diastatic power is measured in degrees lintner (often denoted with a big °L) or Windisch-Kolbach units (degrees °WK). Convertion from one to the other is possible by using the following equations Lintner=(WK+16)/3.5 or WK=3.5 X Lintner - 16. Methods for determination of diastatic power are known to a person skilled in the art and may be carried out e.g. according to Analytica-EBC 4.12, Diastatic Power of malt. In a specific embodiment of the invention the germinated and dried grains have diastatic power of 500 to 1400 WK/100 g d.w., more specifically 650 to 1300 WK/100 g d.w., most specifically 800 to 1200 WK/100 g d.w.

Beta-amylase enzymes (1,4-alpha-D-glucan maltohydrolase, E.C.3.2.1.2) hydrolyse (1->4)-alpha-D-glucosidic linkages in polysaccharides. Working from the non-reducing end, beta-amylase catalyzes the hydrolysis of the second $\alpha$-1,4 glycosidic bond, cleaving off two glucose units (maltose) at a time. Beta-amylase enzymes act on starch, glycogen and related polysaccharides and oligosaccharides producing beta-maltose by an inversion. Beta-amylase is present in an inactive form prior to seed germination.

In a specific embodiment of the invention the germinated and dried grains have *endo*- xylanase. *endo*-Xylanase (*endo*-1,4-$\beta$-xylanase, EC 3.2.1.8) is responsible for the hydrolytic degradation of xylans. *endo*-Xylanases hydrolyse the $\beta$-1,4-glycosidic bonds linking the xylopyranosyl residues present in the main chain of xylans. *endo*-Xylanase activity can be measured e.g. using DNS method, the Nelson Somogyi-method or methods based on dyed substrates (McCleary & McGeough, 2015; Somogyi, 2052; McCleary 1991).

Malted grains are cereal grains that have been germinated and dried in a process known as "malting" or "sprouting". The grains are made to germinate by soaking in water, and are then halted from germinating further by drying with hot air. As used herein, malting refers to a processing method of grains comprising at least three steps namely immersion, germination and drying step with hot air, however, without destroying significant enzyme activities. In a specific embodiment of the invention malting grains are treated by specific methods to provide clear added value to animal feed.

In the immersion step the cereal is steeped in water to provide a suitable moisture content (e.g. about 45%). When the kernels are suitably moist (e.g. at least about 37%), they start to germinate. This germination step lasts several days (e.g. about six days). In the germination step the grains may be constantly turned over and/or air-dried. The germinated malt is dried with hot air in order to stop germination and the moisture content thereby decreases (e.g. to about 7%). Kilndrying may be used to achieve the desired color and specification. Malts range in color from very pale through crystal and amber to chocolate or black malts. The kilning temperature is usually around 55°C.

In a specific embodiment the drying of germinated grains with hot air comprises drying in the temperature of about 60°C. In other words, the germinated grains are dried with hot air in the temperature of about 40 to 70°C. The temperature of about 60°C enables maintaining enzyme activities of the grains.

In a specific embodiment the malting process further includes a step of purifying and/or screening the cereal before immersion step and/or a step of removing the rootlets from the partially germinated seeds after the drying step. Methods of purifying and screening or removing rootlets are known to a person skilled in the art. In another specific embodiment, before immersion step the seeds are stored for one or more weeks to overcome seed dormancy.

Grains of different cereals may be malted either in the same conditions or in different conditions.

In a specific embodiment of the disclosure the germinated and dried grains have been produced by any method described in this disclosure.

**Feed**

The feed or feed composition of the present invention comprises germinated and dried grains. Germinated and dried grains of the present invention may be present in feed in any amount suitable for the animal in question, such as selected from the group consisting of 0.1 - 50 % (w/w), 1 - 40 % (w/w), 1 - 35 % (w/w), 1 - 30 % (w/w), 1 - 20 % (w/w), 1 - 15 % (w/w), 1 - 10 % (w/w), 1 - 5 % (w/w), 0,5 - 30 % (w/w), 0,5 - 20 % (w/w), 0,5 - 10 % (w/w), 10 - 20 % (w/w), 10 - 30 % (w/w), 10 - 40 % (w/w), 10 - 50 % (w/w), 20 - 30 % (w/w), 20 - 40 % (w/w), 20 - 50 % (w/w), 30 - 40 % (w/w), 30 - 50 % (w/w) or 40 - 50 % (w/w). As used herein "% (w/w)" refers to mass fraction i.e. % mass/mass. Very specific doses of germinated and dried grains and/or feed may have the most efficient and cost effective advantages on animals. The germinated and dried grains of one or several different cereals may be present in the feed of the present invention. In one embodiment the germinated and dried grains are from one or several varieties.

In addition to germinated and dried grains the feed or feed composition of the present invention may comprise one or more agents selected from the group consisting of unmalted cereal grain, hay, source of vegetable or animal protein, oils, fats, minerals and vitamins.

As used herein "source of vegetable protein" refers to any vegetable or any part thereof such as a seed, grain, or fruit, which contains proteins, more typically lots of proteins (i.e. protein rich nutrient). For example non-germinated grains are usually present in feed. As used herein "source of animal protein" refers to any animal derived or animal produced product or any part thereof, e.g. meat, egg, bone or fish, which contains proteins, more typically lots of proteins (i.e. protein rich nutrient). Vegetables, animals or parts thereof suitable for animal feed, may be chosen for the composition of the present invention. Animal proteins are commonly used in animal feed in combination with vegetable proteins.

The feed of the present invention may comprise oils or fats selected from the group consisting of vegetable oil, vegetable fat, animal oil and animal fat. "Vegetable oil" or "vegetable fat", in this context, refers to oil or fat of vegetable origin obtained by extracting or producing oil or fat from seeds or fruits which are processed for edible purposes. "Animal oil" or "animal fat", in this context, refers to oil or fat of animal origin obtained by extracting or producing oil or fat, which are processed for edible purposes.

It is also disclosed a feed or composition for horses comprising

| a) germinated and dried grains | 30-40% (e.g. 35%) (w/w) and |
|---|---|
| b) dry hay (e.g. timothy) | 60-70% (e.g. 65%) (w/w). |

The grains fed to horses vary from continent to continent being e.g. barley or oats. Those grains are also used as major components in commercial pelleted feeds. Barley and oats has husk or hull that provides fiber essential to proper function of the digestive tract. However, the main source of fiber is hay. The grain portion is recommended to be not more than 60% (by energy) of a horse's daily ration.

In a very specific embodiment of the invention the feed or composition for **poultry** (e.g. chickens) comprises

| a) germinated and dried grains | 0.5-30% (e.g., 1, 5, 10, 15 or 20 %) and |
|---|---|
| b) starter diet or grower diet | 70-99.5% (e.g. 80, 85, 90, 95 or 99%) |

In one embodiment of the invention the feed may further comprise minerals and/or vitamins. Minerals and vitamins may include any minerals or vitamins well known in the art including but not limited to vitamins K, E, D, C, $B_9$, $B_7$, $B_6$, $B_5$, $B_3$, $B_2$, $B_{12}$, $B_1$, A and including but not limited to minerals calcium, phosphorus, potassium, sulfur, sodium, chlorine, magnesium, iron, cobalt, copper, zinc, manganese, molybdenum, iodine, bromine and selenium. The feed of the present invention may comprise one or more vitamins and/or one or more minerals. Suitable minerals and/or vitamins are well known to a person skilled in the art and may be utilized in the feed of the present invention.

In a specific embodiment the feed of the present invention does not comprise any pharmaceutical agents. However, optionally, the composition may comprise pharmaceutical agents conventionally used in animal feed. Pharmaceutical agents suitable for the composition of the present invention are well known in the art.

Furthermore, the feed may comprise added enzymes, even though these may not be needed in addition to germinated and dried grains of the present invention in order to achieve excellent results. In a specific embodiment of the invention, the feed comprises one or more added enzymes selected from the group consisting of xylanase, protease, alfa-amylase, beta-amylase, pectinase, phytase, other hydrolytic enzymes and any other enzymes well known in the art and suitable for animal feed. Suitable enzymes are well known to a person skilled in the art. In a further embodiment the animal feed of the present invention does not comprise any added, transgenic or exogenous enzymes.

The feed or feed composition for animals may additionally contain any other optional agents or components that are generally used in ordinary feed compositions.

In a specific embodiment the basic diet (e.g. starter, grower or finisher phase) for poultry (e.g. broiler chickens) comprises the following ingredients:

% (w/w)

(continued)

| | |
|---|---|
| germinated and dried grains and other starch rich grains (e.g. wheat and corn) | 45 - 85 |
| protein-rich components (e.g. soybean meal) | 15-45 |
| oils and fats (e.g. soy and sunflower oil, tallow) | 1-5 |

In one embodiment of the invention, the feed or feed composition is an organic feed or feed composition, respectively.

Means and methods for physically formulating the present germinated and dried grains or feed preparations or compositions are known to persons skilled in the art, and may be manufactured in a manner which is in itself known, for example, by means of conventional adding, mixing, compounding, grinding, granulating, pelleting, dissolving, smashing, chopping or similar processes. Suitable formulation methods can be determined readily by those skilled in the art. In one embodiment of the invention the animal feed is in a form of normal animal diet, wherein the germinated and dried grains in any form have been added (e.g. mixture of hay and germinated and dried grains). Said forms include, but are not limited to, pellets (e.g. compounded, pelleted), capsules, crumbles, mash, smash, powder, liquid or any combination thereof. Furthermore, the feed of the present invention may comprise for example whole seeds, peas, beans, grains, any parts thereof and/or powder thereof. In some embodiments, the feed is in muesli like form i.e. containing particles or crumbles of different sizes. Physical forming of feeds (e.g. adding, mixing, compounding, grinding, granulating, pelleting, dissolving, smashing or chopping) may change the size of the feed particle.

In one embodiment of the invention, the germinated, dried grains in any form and the other ingredients of animal diet are fed to an animal separately. In one embodiment the grains are in the form of grains, ground, flour, pellets, capsules, crumbles, mash, smash, liquid, extract or any combination thereof.

The feed or feed composition of the invention may be fed to an animal any time throughout the rearing period, but, if desired, an animal may be fed with the feed or feed composition of the invention at predetermined intervals. Animals may be fed with the feed composition of the invention continuously every day. In a specific embodiment no additional feed is needed. Alternatively, feed of the present invention may be fed to animals periodically, e.g. one or several days, weeks or months at a time, one or several times a day e.g. for a specific time period, or during several consecutive time periods. In specific embodiments the feed is available for animals all the time. In another specific embodiment no other feed than the feed of the present invention is fed to an animal. In a more specific embodiment the feed of the present invention and water are freely available for animals. In addition to feed an animal may receive e.g. water, salt, minerals and/or pharmaceutical compositions. In one embodiment the feed of the present invention is fed together with any other feed or compositions to an animal.

It is also disclosed that the composition or animal feed is used to feed horses every day e.g. one or several times (e.g. three times) per day for a period of time. The time period may include e.g. one or several weeks, a month or several months or a year or several years, e.g. a lifetime.

In one embodiment of the invention the composition or animal feed is used to feed poultry (e.g. broiler chickens) daily for a period of up to 35 days or for a lifetime. In another specific embodiment of the invention, the composition or feed is for starter, grower or finisher diet.

Any ordinary feeding method may be utilized for feeding animals according to the present disclosure. Feeding methods are well known to a person skilled in the art and he knows when and how to apply these methods. A skilled person knows that the amount of consumed feed depends e.g. on the size and age of an animal, the amount of physical exercise, living conditions and/or individual need of energy.

The feed and the feeding method of the disclosure are suitable for any animals either wild animals or domesticated animals. There are three classes of animal domesticates: (1) commensals, adapted to a human niche (e.g., dogs, cats, guinea pigs); (2) production animals farmed for food (e.g., cows, sheep, pig, goats); and (3) targeted animals for draft and nonfood resources (e.g., horse, camel, donkey). As an example an animal may be selected from *Equidae*, which is the taxonomic family of horses and related animals, including the extant horses, donkeys, and zebras; from *Artiodactyla* including animals such as sheep, goats, camels, pigs, cows, deer, giraffes, and antelopes; or poultry, which most typically belong to the superorder *Galloanserae* (fowl). In one embodiment an animal to be fed according to the present disclosure may be selected from the group consisting of domestic animals or livestock, monogastric or ruminant production animals, horses, sheep, porks, pigs, poultry, beef animals, milk producing animals, cats or dogs. In a further embodiment the poultry is selected from the group consisting of broilers, chickens (e.g. breeders or layers), turkeys and game birds.

According to the present disclosure the palatability (flavor, taste, consistency and/or texture) of malted cereal or grain was good for all animals. The feed was well digested and nutrients well absorbed from the intestine. Furthermore, the fed animals were healthy.

**Effects on animals**

The feed of the invention had several positive effects compared to feed, which does not comprise germinated and dried grains having alpha-amylase activity of at least 60 DU/g d.w., specifically 70 to 200 DU/g d.w., more specifically 80 to 150 DU/g d.w.

Germinated and dried grains as disclosed herein significantly boosted the solubilisation and hydrolysis of carbohydrates in the feed materials. In the malting process used in the present invention grains expressed enzymes that readily attack non-starch carbohydrate substrates present in the feed materials that are most commonly used by the global feed industry.

Germinated and dried grains used as disclosed herein improved the weight gain of animals and reduced feed consumption. The enzymes and easily digestible nutrients of germinated and dried grains are beneficial for different animals (e.g. horses, pigs or poultry). The faster growth and reduced feed consumption turn into improved feed conversion ratios, indicating better profitability of e.g. chicks. The improved feed utilization in the examples of the present disclosure suggests that germinated and dried grains of the present invention are an excellent feed ingredient for animals. The studies of the examples show that the inclusion of dry malt produced a better bird performance than the inclusion rate of fresh malt.

The action of the parasites to the intestinal epithelium decreases the rate of nutrient absorption, damages the epithelial barrier function against pathogenic bacteria, and greatly increases the susceptibility to secondary infections. As an example intestinal infection called coccidiosis is one of the main problems for the international poultry industry, especially in the broiler sector. Coccidiosis of chicken is caused by microparasites of genus *Eimeria* which infect the intestinal epithelium. Necrotic enteritis, which is the most severe bacterial infection associated with coccidiosis, causes significant economic losses to poultry producers each year.

According to the examples of the present disclosure, the feed comprising germinated and dried grains was able to have positive effects on chickens during and/or after *Eimeria* infection. The feed of the present invention has effects on the intestine of poultry. The feed causes a shift in small intestinal parameters of young chickens to the direction, which indicates intestinal welfare. In the immunological defence system, the level of the most important secreted antibody, immunoglobulin A, was significantly elevated by inclusion of germinated and dried grains of the invention, and the significant increase in the residual concentration of lactic acid which said grains were found to catalyse can also be considered as an indicator of improved intestinal welfare. Inclusion of germinated and dried grains of the invention shifted microbial fermentation to a beneficial direction, which was measured by multiple parameters. In small intestine, the numbers of lactic acid producing bacteria were increased and the fermentation was directed to heterofermentative direction, which has previously been found to indicate good animal performance. In caecum, the parameters indicating excessive passage of sugars from small intestine showed that germinated, dried grain could reduce this trend, thus retaining a higher proportion of dietary energy to the animal host.

Furthermore, inclusion of germinated and dried grains suppressed significantly the numbers of *Cl. perfringens*, while *Eimeria* as well as total microbial counts were not affected. The specific suppression of *Cl. perfringens* together with the improvement of FCR in challenge trial strongly suggest that inclusion of germinated, dried grains in the diet reduces efficiently the *Cl. perfringens* infection severity during the acute phase of necrotic enteritis in chicken.

Inclusion of germinated and dried grains in the diet improved performance of broiler chickens highly significantly under the conditions of necrotic enteritis challenge. At 5% and 10% inclusion the malt product increased body weight gain during the whole 0-35d trial period by 137 and 157 grams, and, reduced feed consumption by 6% and 7%, respectively. During the starter diet period, before the necrotic enteritis challenge the best feed conversion efficiency was achieved with 5% malt inclusion. During the grower diet period, at the recovery phase the best results were achieved with 10% malt inclusion. Only during the most severe phase of necrotic enteritis the coccidiostat Narasin yielded better feed conversion efficiency than germinated, dried grains.

Small intestine digestion is the key point of grain feeding in horses. The equine digestive tract amylase production and activity are important limiting factors for the use of grains in equine diets. Amylase is the enzyme taking care of starch digestion and when the capacity is overloaded starch flows to large intestine and possibly creates problems. According to the present disclosure the small intestine digestive availability and capacity of germinated and dried grain starch was improved compared to other grains. The steady blood glucose level for a long time after the ingestion of malted grain meal provides readily available energy to the horse. Thus, germinated and dried grains were considered effective in increasing precaecal digestibility of grain. With improving starch digestibility larger portions of starch can be safely fed without detrimental effects (e.g. colics, bowel acidosis or laminitis) in the digestive tract. A steady metabolic state means better welfare for the horse.

According to the present disclosure germinated and dried grains having alpha-amylase activity of at least 60 DU/g d.w., specifically 70 to 200 DU/g d.w., more specifically 80 to 150 DU/g d.w. may be used in horse feeding as a main cereal grain or as a main component in commercial e.g. compounded feeds.

An exemplary method for feeding animals comprises providing feed for the animals, wherein said feed comprises germinated and dried grains having alpha-amylase activity of at least 60 DU/g d.w., specifically 70 to 200 DU/g d.w., more specifically 80 to 150 DU/g d.w.

An exemplary animal feed comprises germinated and dried grains, which have alpha-amylase activity of at least 60 DU/g d.w., specifically 70 to 200 DU/g d.w., more specifically 80 to 150 DU/g d.w.

An exemplary use comprises use of germinated and dried grains having alpha-amylase activity of at least 60 DU/g d.w., specifically 70 to 200 DU/g d.w., more specifically 80 to 150 DU/g d.w., in feed for animals.

An exemplary use comprises use of germinated and dried grains having alpha-amylase activity of at least 60 DU/g d.w., specifically 70 to 200 DU/g d.w., more specifically 80 to 150 DU/g d.w., in feed for animals to improve feed conversion rate in chicken.

An exemplary use comprises use of germinated and dried grains having alpha-amylase activity of at least 60 DU/g d.w., specifically 70 to 200 DU/g d.w., more specifically 80 to 150 DU/g d.w., in feed for animals to improve intestinal health of chicken during and/or after Eimeria infection.

An exemplary use comprises use of germinated and dried grains having alpha-amylase activity of at least 60 DU/g d.w., specifically 70 to 200 DU/g d.w., more specifically 80 to 150 DU/g d.w., in feed for animals to reduce Clostridium perfringens infection severity in chicken.

An exemplary use comprises use of germinated and dried grains having alpha-amylase activity of at least 60 DU/g d.w., specifically 70 to 200 DU/g d.w., more specifically 80 to 150 DU/g d.w., in feed for animals to improve performance of chicken under conditions of necrotic enteritis challenge.

An exemplary use comprises use of germinated and dried grains having alpha-amylase activity of at least 60 DU/g d.w., specifically 70 to 200 DU/g d.w., more specifically 80 to 150 DU/g d.w., in feed for animals such as horses to increase precaecal digestibility of grain.

An exemplary feed comprises 0.5 - 100 % (w/w), 0.1 - 50 % (w/w), 0.5 - 50 % (w/w), 1 - 40 % (w/w), 1 - 35 % (w/w), 1 - 20 % (w/w), 1 - 15 % (w/w), 1 - 10 % (w/w) or 1 - 5 % (w/w) germinated and dried grains.

An exemplary feed for horses comprises

| | |
|---|---|
| a) germinated and dried grains | 30-40% (w/w), |
| b) dry hay such as timothy | 60-70% (w/w). |

In an embodiment, the feed for poultry comprises

| | |
|---|---|
| a) germinated and dried grains | 0.5-30% (w/w), |
| b) starter diet or grower diet | 70-99.5% (w/w). |

In an embodiment, the feed comprises minerals, vitamins and/or enzymes.

In an embodiment, the animals are selected from the group consisting of animals of the *Equidae* family such as horses, animals of the *Artiodactyla* family such as sheep, goats, pigs and cows, poultry such as broilers, chickens, turkeys and game birds, and commensals such as dogs and cats.

In an embodiment, the animals are selected from the group consisting of horses, pigs and broilers.

In an embodiment, the germinated and dried grains have diastatic power of 500 to 1400 WK/100 g d.w., more specifically 650 to 1300 WK/100 g d.w., most specifically 800 to 1200 WK/100 g d.w.

In an embodiment, the grains have the following grain quality:

protein content % (% mass/mass on dry basis)     9-16.

In an embodiment, the grains include cereal grains from one or more cereals selected from the group consisting of barley, wheat, rye, oat.

In an embodiment, the grains are in the form of grains, ground, flour, pellets, capsules, crumbles, mash, smash, liquid, extract or any combination thereof.

In an embodiment, the grains have been dried with hot air comprising drying in the temperature of about 40-70°C.

The present invention is illustrated by the following examples, which are not intended to be limiting in any way.

EXAMPLES

**I. Malt derived products as value added feed ingredients - evaluation study based on *in vitro* laboratory models**

**1. Materials and methods**

1.1. *Carbohydrate rich raw materials*

1.1.1. *Removal of starch*

Wheat and maize were selected for this study as examples of grains that are commonly used in feeds for monogastric animals. The specific target of the work was to study whether enzymes in malt can hydrolyse non-starch polysaccharides in the grains. Since up to 60% of the wheat and maize dry matter can be starch, we decided to remove as much starch as possible from the grain preparations before the malt hydrolysis test. The rationale was that the high carbohydrate content present in the raw materials was assumed to make detection of the hydrolysis of non-starch polysaccharides impossible due to high sugar background.

100 grams of ground wheat or maize was suspended in 900 ml of $H_2O$. $CaCl_2$ (0.5 mM) was added to aid in the coming EtOH precipitation. 200 $\mu$l of $\alpha$-amylase (Sigma A3306) was added and the mixture was heated to 90-100 $\underline{o}$C. The reaction was continued for 60 minutes, mixing once every 5 minutes. The suspension was then allowed to cool down to room temperature and then it was centrifuged at 30 000 $\times$ $g$ for 20 minutes. The supernatant (referred to as S1) was collected and the pellet was suspended in 100 ml of ion exchanged $H_2O$ for washing of the pellet. The suspension was then again centrifuged at 30 000 $\times$ $g$ for 20 minutes. The supernatant was combined with the previous supernatant (S1) and the pellet (referred to as P1) frozen to be used later.

The polysaccharides in the combined supernatants were precipitated by adding EtOH to the final concentration of 80%. After overnight precipitation the reaction mixture was centrifuged at 30 000 $\times$ $g$ for 20 minutes. The supernatant which contained monomeric carbohydrates from enzymatic hydrolysis was discarded and the pellet with oligo- and polymeric carbohydrates was suspended in 100 ml of $H_2O$. 20 $\mu$l amyloglucosidase (Fluka A9913) was added to convert the rest of the maltose, maltotriose or limit dextrin into monomeric glucose. The reaction at 55 $\underline{o}$C was continued for 60 minutes, mixing once every 5 minutes. The polysaccharides in the supernatant were precipitated by adding EtOH to the final concentration of 80%. After overnight precipitation the reaction mixture was centrifuged at 30 000 $\times$ $g$ for 20 minutes. The pellet containing non-starch polysaccharides was combined with the water insoluble fraction of the original material (P1). This product was used in the malt hydrolysis study.

The recoveries of the fractions used were 48.9 and 50.9 grams from 100 grams of ground wheat and maize starting material, respectively. These figures are consistent with close to complete elimination of starch from the grains.

1.1.2. *Treatments*

Starch poor wheat and maize preparations were digested with the enzyme rich barley malt product (alpha-amylase activity > 100 DU d.w., diastatic power >700 WK d.w.). The list of treatments for wheat and maize was as follows in Table 1.

**Table 1.** Treatments for wheat and maize.

| Treatment # | Malt (g) | Wheat (g) | Maize (g) | Replicates |
|---|---|---|---|---|
| 1 | 0.1 | | | 5 |
| 2 | 0.2 | None | None | 5 |
| 3 | 2.0 | | | 5 |
| 4 | 0 (0%) | 2.0 | | 5 |
| 5 | 0.1 (5%) | 1.9 | None | 5 |
| 6 | 0.2 (10%) | 1.8 | | 5 |
| 7 | 0 (0%) | | 2.0 | 5 |
| 8 | 0.1 (5%) | None | 1.9 | 5 |
| 9 | 0.2 (10%) | | 1.8 | 5 |

The basic principle was that in treatments with wheat or maize the total dry matter added in each reaction vessel was 2.0 grams. When malt was introduced alone the absolute amounts of malt were the same levels that were added together with the grains (0.1 and 0.2 g dry matter). In addition, 2.0 grams of malt dry matter was added alone to see how much reaction products are released when endogenous malt enzymes are hydrolysing the polymers (starch, hemicellulose, glucans) in the malt itself. The treatments and replicates were run and analysed in a randomised order to avoid any systematic shifts caused by the handling order.

*1.1.3. Digestion protocol*

Pretreated wheat and maize and malt were weighed in reaction vessels according to the treatment table 1 above and then 4 ml of $H_2O$ was added. The hydrolysis phases mimicked conditions the feed for chickens is exposed to as follows:

1. Pre-feeding: 1.0 h at 25 ºC, pH as is,
2. Crop: 1.0 h at 40 ºC, pH 4.5,
3. Proventriculus (stomach): 0.5 h at 40 ºC, pH 3.5,
4. Duodenum (uppermost small intestine): 1.0 h at 40 ºC, pH 6.5.

Digestive enzymes secreted to the stomach and duodenum of the host *in vivo* were omitted because they would significantly impair our possibilities to detect the activities of the test product. At the end of the digestion protocol $H_2O$ was added in each reaction vessel to the final volume of 20 ml. After thorough shaking samples were withdrawn for various analyses and immediately frozen.

1.1.4. *Analyses*

Samples were thawn and centrifuged at 30 000 $\times$ *g* for 10 minutes. The supernatant was then analysed for total soluble reducing sugars (ends of sugar chains or oligosaccharides) by the DNS (3,5-dinitrosalicylic acid) method. This method only provides information on the total quantity of reducing sugars, not their type.
The composition of soluble carbohydrates was analysed by HPLC after acid hydrolysis. Since this method shows the total amount and type of sugar monomers, it was expected to give a higher number of equivalents than the DNS method which measures the number reducing sugar units before hydrolysis.

1.3. Statistical analysis

Statistical analysis consisted of two-tailed t-tests for all measured parameters. The tests were performed for the 2 feed raw materials at 25 and 50 mg/ml malt inclusion levels. Comparison was carried out against the corresponding feed with no included malt similarly to Dunnett's post hoc test. However, t-test was chosen to let the individual inclusion level be independent of the other level tested simultaneously.
Significance according to Student's t-test:

p-value < 0.1 ~
p-value < 0.05 *
p-value < 0.01 **
p-value < 0.001 ***
p-value < 0.0001 ****

**2. Results**

2.1. Hydrolysis and solubilisation of polysaccharides in wheat and maize by malt

In this study, destarched wheat and maize were used as substrates for the malt enzymes. Furthermore, removing most of the starch significantly improves the possibilities to detect the function of malt derived enzymes that are able to attack soluble and insoluble hemicellulose.
Wheat and maize preparations were stepwise exposed to conditions that mimic wetting of the feed, chicken crop, chicken stomach and proximal small intestine. Sugar solubilisation was analysed in the end of the protocol.
When wheat and maize were exposed to the described protocol with no added malt, 500 mg of destarched grain preparation yielded about 20 mg of reducing sugars, calculated as glucose equivalents (**Figure 1**). When analysed by HPLC after acid hydrolysis, the corresponding sugar concentrations were about 120 and 90 mg for wheat and maize, respectively. The difference comes from the fact that DNS method counts only reducing hydroxyl groups of the sugars, the signal per mass unit reducing when the length of the sugar chain is increased. From the difference between the number reducing ends and the total number of sugar units the average length of sugar oligomers can be estimated. With no enzyme inclusion the average degree of polymerisation was about 7 and 5 sugar units for wheat and maize, respectively (**Figure 2**).

When malt was added the concentration of soluble sugars increased significantly whichever method was used for the sugar analysis. The mass of all soluble sugars shown by the HPLC method nearly reached its maximum at the lowest 25 mg/ml (50 mg/g feed material) malt inclusion level. Increasing the malt dose to 50 mg/ml had -10% increasing effect on the solubilisation of maize sugars, but little or no additional effect on wheat (**Figure 1**). With the analysis of reducing sugars the results looked different. Doubling the dose of malt increased the number of reducing sugar ends by 30%. Overall this suggests that the smaller dose of malt was sufficient for the solubilisation of carbohydrates, but with increased malt dose the soluble sugar chains were further hydrolysed more efficiently. As shown in **Figure 2** the estimated degree of polymerisation for wheat dropped from ~7 to 2.5 and for maize from ~5 to 2.5 by malt enzymes.

In **Figure 1** the release of sugars from the malt itself is also shown (columns marked with "None"). These treatments were included to ensure that the measured sugar products are not coming from the hydrolysis of malt itself. When malt alone went through the protocol at the same doses used in other treatments with wheat and maize, the release of sugars was insignificant as compared to the treatments containing also the grain preparations. Carbohydrates from the malt controls had the average degree of polymerisation 2 or less (columns marked with "None" in the **Figure 2**).

Overall the results indicate that malt enzymes i) improved the solubilisation of carbohydrates from the solid phase and ii) cut the soluble carbohydrates to smaller oligomers. From 500 mg of grain preparation malt solubilised as much as 100 mg of sugars, of which 10 to 20 mg came from the malt itself.

The HPLC analysis indicated that there were 3 major sugars present in the acid hydrolysate, glucose, xylose and arabinose. In wheat, glucose represented about 94 % and xylose + arabinose 6 % of all sugars. In maize the percentage of xylose + arabinose was lower, only 1-2 %. These numbers are consistent with the previously published data.

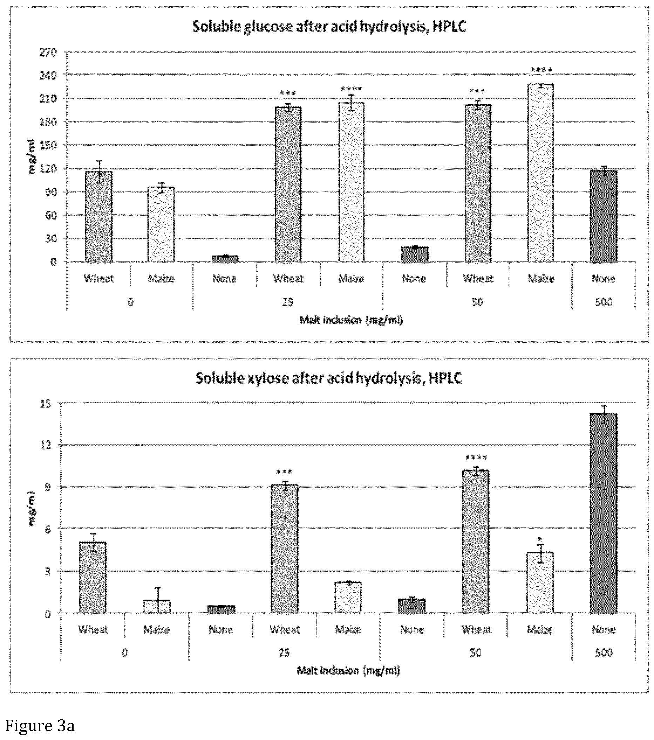

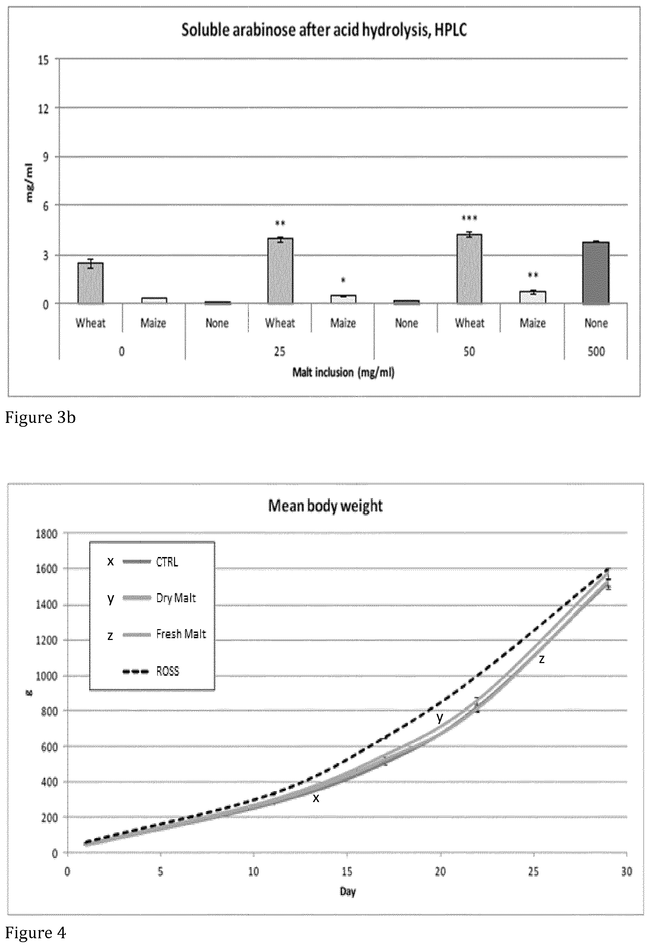

Mixing malt with the grain preparations catalysed sugar solubilisation; the concentration of the mentioned sugars doubled in the soluble phase (**Figures 3a, 3b**). The effect of malt was statistically highly significant for all sugars.

**II. Effect of malt products on the performance of coccidia-challenged broiler chicks**

**1. The experiment**

1.1. Dietary treatments

The diet was wheat-soy -based commercial-type feed for broiler chicks without coccidiostats or feed enzymes. Table 2 shows the dietary formulation of the starter and grower diets. Starter formula was fed on days 1-17 and grower formula on days 17-29. Wheat and soybean meal were analyzed for basic nutrients and amino acid profiles for the final formulation.

The trial included the following dietary treatments:

1. Control. Negative control, no amendments-
2. Dry barley malt, 10%, dried with hot air (alpha-amylase > 100 DU d.w., diastatic power > 700 WK d.w.)
3. Fresh barley malt, 5%, gently air-dried

Two malt products were tested: whole malt grains which were dried using heat at Viking Malt, and fresh malt grains which were gently air-dried at Alimetrics. The malt products replaced an equal weight of the wheat of the dietary formula. Both types of malt grain were ground to coarse flour at the feed mill of Agrifood Research Finland (Jokioinen) just before mixing the feeds. The rationale for using the fresh malt was that the heat of the normal drying process likely inactivates some of the enzymes in malted seeds. The health benefits might thus be higher in the fresh than in the heat-dried malt. For the formulation of the diets, nutrient values for barley malt were obtained from table values of Agrifood Research Finland.

**Table 2.** Dietary formulas.

| Ingredients | Control | | Dry Malt | | Fresh Malt | |
|---|---|---|---|---|---|---|
| | Starter % | Grower % | Starter % | Grower % | Starter % | Grower % |
| Wheat | 57.42 | 67.53 | 49.55 | 53.66 | 56.85 | 60.98 |
| Soybean meal | 34.79 | 26.97 | 32.50 | 28.10 | 31.60 | 27.20 |
| Sunflower oil | 4.00 | 1.25 | 4.00 | 4.00 | 2.60 | 2.60 |

(continued)

| Ingredients | Control | | Dry Malt | | Fresh Malt | |
|---|---|---|---|---|---|---|
| | Starter % | Grower % | Starter % | Grower % | Starter % | Grower % |
| Monocalciumphosphate | 1.50 | 1.50 | 1.50 | 1.50 | 1.50 | 1.50 |
| Limestone | 1.30 | 1.40 | 1.30 | 1.40 | 1.30 | 1.40 |
| NaCl | 0.40 | 0.40 | 0.40 | 0.40 | 0.40 | 0.40 |
| Mineral premix*) | 0.20 | 0.20 | 0.20 | 0.20 | 0.20 | 0.20 |
| Vitamin premix**) | 0.20 | 0.20 | 0.20 | 0.20 | 0.20 | 0.20 |
| Methionine | 0.10 | 0.15 | 0.15 | 0.15 | 0.15 | 0.13 |
| Lysine | 0.09 | 0.30 | 0.20 | 0.34 | 0.20 | 0.34 |
| Threonine | 0.00 | 0.10 | 0.00 | 0.05 | 0.00 | 0.05 |
| Test product | 0.00 | 0.00 | 10.00 | 10.00 | 5.00 | 5.00 |
| **Total** | 100.00 | 100.00 | 100.00 | 100.00 | 100.00 | 100.00 |

*) Contents of the mineral premix: calcium 296.8 g/kg, iron 12.5 g/kg, copper 4 g/kg, manganese 25 g/kg, zinc 32.5 g/kg, iodine 0.225 g/kg, selenium 0.1 g/kg.
**) Contents of the vitamin premix: calcium 331.3 g/kg, vitamin A 6000000 IU, vitamin D3 2250000 IU, vitamin E 30000, tocoferol 27270 mg/kg, vitamin K3 1505 mg/kg, vitamin 81 1257.3 mg/kg, vitamin B2 3000 mg/kg, vitamin B6 2009.7 mg/kg, vitamin B12 12.5 mg/kg, biotin 75 mg/kg, folic acid 504 mg/kg, niacin 20072 mg/kg, panthotenic acid 7506.8 mg/kg.

### 1.2. Animals and housing

Male Ross 508 broiler chick hatchlings were purchased from the commercial hatchery of HK-Ruokatalo (Mynämäki). A veterinarian checked the health of the chicks on day 1, and gave a certificate to verify that they were in normal body condition at the start of the trial. The experiment was approved by the National Animal Experiment Board of Finland.

The chicks were housed in open pens (1.125 $m^2$ each) with wood shavings litter, 15 chicks per pen. Each pen was equipped with a feeder. A nipple watering line served two nipple drinkers in each pen. Brooder lamps were adjusted to provide extra heating to the chicks during the first week.

The lighting programme in the hall mimicked conditions in commercial broiler halls in Finland. On day 1, the lights were on for 24 hours. From day 2, the dark period increased an hour per day, until on day 7 there was 18 hours light and 6 hours dark per day. This 18/6 light:dark cycle was then continued until the end of the trial.

The temperature program followed instructions of Aviagen for Ross broilers. Temperature was monitored and recorded daily with several thermometers.

The birds were randomly allocated into the three dietary treatments. There were eight replicate pens (120 chicks) in the control treatment, and seven replicate pens (105 chicks) for the barley malt treatments. The treatment pens were randomized into the hall. Each chick was marked with permanent color to the feathers that identified the treatment but not the individual animal.

Feed and water was freely available at all times during the study. The chicks were checked at least once every day, and twice per day during the challenge period, by trained personnel.

### 1.3. Eimeria challenge

On day 11, the chicks were weighed and challenged with *Eimeria maxima* oocysts of the Weybridge strain. The challenge, 1500 oocysts per bird, was orally inoculated to each individual chick in 150 $\mu$l of tap water. The challenge aimed to induce subclinical coccidiosis with a decreased bird performance but without an increase in the mortality.

### 1.4. Performance parameters

The chicks were weighed individually on days 1, 11, 17, 22 and 29. Feed given to the pens was weighed and recorded, and leftover feeds in the feeders were weighed at each time point. The reason for the multiple performance-measuring points is that the aim is to find out the effect of the feed additive both to the disease process and recovery from the disease. Feed intake per pen and the feed conversion ratio (FCR) were measured for the following four periods:

- Days 1-11, starter diet period, pre-challenge,
- Days 11-17, starter diet period, coccidiosis challenge,
- Days 17-22, grower diet period, coccidiosis,
- Days 22-29, grower diet period, recovery period.

Feed conversion ratio (FCR) measures the quantity of feed that is needed to produce a unit mass of bird during a certain period of time. For a broiler farmer this ratio is crucial for the profitability calculations. To measure FCR, live mass of chicks is measured in the beginning of the selected time period, feed given to the chicks is measured, and at the end of the study period the chicks and the leftover feeds are weighed.

Birds that were found dead in the pens, and birds euthanized because of leg problems, injuries, or other health problems, were weighed and recorded, and stored in freezer until the end of the trial. As the mortality in the trial remained low, and there were no symptoms of other diseases than coccidiosis, the dead birds were not subjected to necropsy.

### 1.5. Sampling and sample storage

On day 17, two birds per pen were weighed and euthanized by cervical dislocation. The abdominal cavity was opened, and the ileum, and the paired caeca were removed. Ileum and the paired caeca were packed in individual plastic bags, frozen immediately, and stored in freezer. On day 29, a similar set of samples was collected, and all the remaining birds were weighed and euthanized. Together, the two sampling points produced 88 ileal and 88 cecal digesta samples.

### 1.6. Bacterial DNA extraction from ileal and caecal samples

For DNA extraction the bacteria in the samples were separated by differential centrifugation, bacterial cell walls disrupted, and the chromosomal DNA quantitatively purified using the Alimetrics in-house protocol, which is optimised and validated for the bacterial DNA extraction from chicken digesta samples. In the initial washing step of the samples the major target was to remove feed particles and complex polysaccharides, which disturb the subsequent DNA purification process and the downstream PCR applications. Consequently, a total of 88 ileal and 88 caecal DNA samples were subjected to qPCR analyses as specified below.

### 1.7. Quantitative real-time PCR analyses

The real-time PCR system is based on the detection and quantification of a fluorescent reporter. This signal increases in direct proportion to the amount of PCR product in the reaction. By recording the amount of fluorescence emission at each cycle, it is possible to monitor the PCR reaction during exponential phase where the first significant increase in the amount of PCR product correlates to the initial amount of target template.

In this study, all results (with exception of *Clostridium perfringens* with which single copy gene will be applied as a target) will be expressed as a number of ribosomal RNA (rRNA) gene copies per 1 g of digesta. In order to estimate the number of chromosomes/genomes in the analyses one must divide the obtained results with the average rRNA copy number of the target organisms. For *E. coli* the copy number is 7, while *Eimeria* genome encodes roughly 100-200 copies rRNA depending on the species.

The following qPCR panel was applied to ileal digesta samples (target gene in parenthesis):

1) Total eubacteria (16S rRNA gene),
2) *Lactobacillus* spp. (16S rRNA gene),
3) *Enterococcus* spp. (16S rRNA gene),
4) *Streptococcus* spp. (16S rRNA gene),
5) *Escherichia coli* (16S rRNA gene),
6) *Clostridium perfringens* (plc; alpha toxin),
7) *Eimeria* spp. (5S rRNA gene)).

The following qPCR panel was applied to caecal digesta samples (target gene in parenthesis):

1) Total eubacteria (16S rRNA gene),
2) *Lachnospiraceae* (16S rRNA gene),
3) *Ruminococcaceae* (16S rRNA gene),

4) *Bifidobacterium* spp. (16S rRNA gene),
5) *Lactobacillus* spp. (16S rRNA gene),
6) *Coriobacteriaceae* (16S rRNA gene),
7) *Escherichia coli* (16S rRNA gene),
8) *Clostridium perfringens* (plc; alpha toxin encoding gene),
9) *Eimeria* spp. (5S rRNA gene).

1.8. Short-chain fatty acid (SCFA) profiles

Short-chain fatty acids are the major microbial fermentation products that give information on the metabolic activities and fermentation patterns of the microbial community. SCFA profile from 88 ileal and 88 caecal samples were analysed by gas chromatography. The individual SCFAs analysed were lactic, acetic, propionic, butyric and valeric acids, and the branched-chain fatty acids (isovaleric, isobutyric and 2-methyl-butyric acids).

1.9. Statistics

Statistical analysis consisted of two-tailed t-tests for all measured parameters. Student's t-test was chosen to let the individual treatments be independent of the other treatments tested simultaneously. Significance according to Student's t-test (presented in the figures as asterisks):

*p*-value < 0.1 ~
*p*-value < 0.05 *
*p*-value < 0.01 **
*p*-value < 0.001 ***
*p*-value < 0.0001 ****

**2. Results**

2.1. Bird weight gain

During the pre-challenge period the chicks were in good health. The mean weight of the hatchlings on day 1 was 43.5 g, with no statistical differences between the three diet groups.
The mean ($\pm$SE) of the bird weight on days 11, 17, 22 and 29 are shown in Table 3. **Figure 4** illustrates the average weight gain of each treatment group and the mean weight gain of Ross broiler chicks.
In the pre-challenge period, the dry malt at 10% increased the mean weight gain of the chicks, resulting in 5.8% heavier birds on day 11 ($p < 0.05$). The 3.3% heavier of birds in the 5% fresh malt treatment, compared with control birds, was not statistically significant. Similarly, on day 17, Dry Malt chicks were on the average 8.2% heavier than chicks in the control diet ($p < 0.01$), while the 3.7% weight increase by Fresh Malt was not sufficient for statistical significance. During the grower diet period, the benefit of Dry Malt group persisted, but was no longer statistically significant. The lost significance may be due to increased bird-to-bird variation caused by coccidiosis. The weight of chicks in the Fresh Malt group was also statistically similar to the control birds.

Table 3. Mean weight of the chicks at four time points. The asterisks in the Dry Malt group on days 11 and 17 indicate statistically significant difference compared to the control treatment.

| *Diet* | *Day 11* | | *Day 17* | | *Day 22* | | *Day 29* | |
|---|---|---|---|---|---|---|---|---|
| | *mean, g* | *SE* | *mean, g* | *SE* | *mean, g* | *SE* | *mean, g* | *SE* |
| Control | 278 | 4.1 | 504 | 8.15 | 819 | 20.3 | 1516 | 28.1 |
| Dry Malt | **294*** | 4.8 | **545**** | 6.87 | 857 | 19.3 | 1576 | 27.4 |
| Fresh Malt | 287 | 3.7 | 522 | 6.70 | 808 | 15.6 | 1526 | 20.5 |

Comparing the growth curves in the present study to the mean growth of Ross birds (**Figure 4**) illustrates the reduction of growth rate during coccidiosis, and also the recovery from the disease. During the last week of the experiment, all treatments had almost caught the mean Ross weigh gain curve again, which means that the birds were able to compensate for the coccidiosis-induced reduction of body weight gain. In the Dry Malt treatment group, the recovery was numerically faster than with the other treatments.

## 2.2. Feed consumption

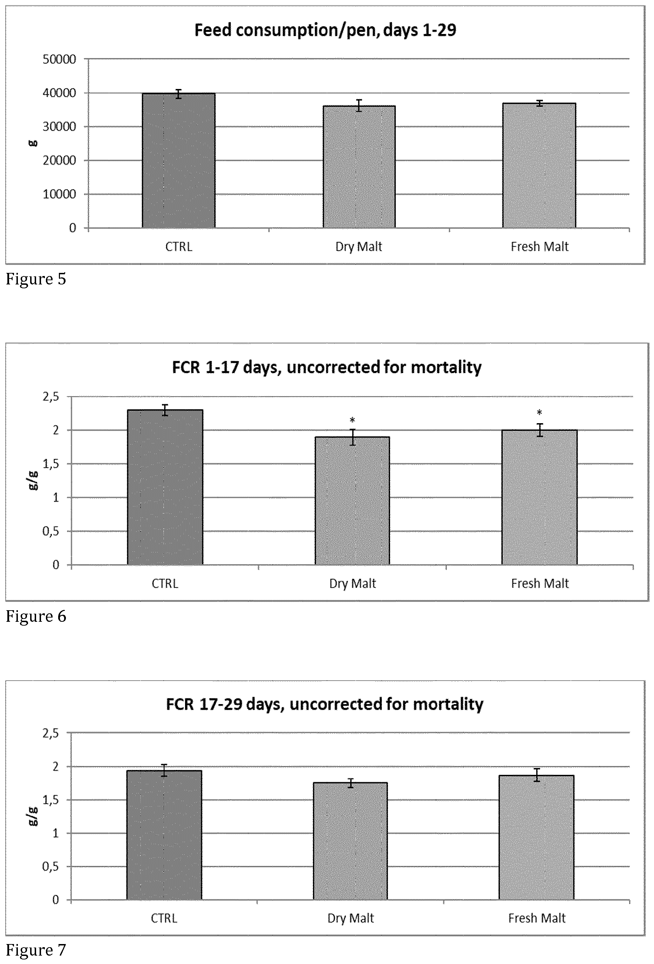

Feed consumption per pen was measured twice for the starter diet period and twice in the grower diet period (Table 4; Figure 5). The average feed consumption was lower in the Dry Malt treatment than in the control treatment in three of the four measured periods. The effect was statistically almost significant for the days 1-11 ($p < 0.1$), and significant for days 22-29 ($p < 0.05$), and only numerically reduced for days 1-17. The period between days 17-22 was the only period in which the feed consumption of the Dry Malt treatment was higher than that of the control treatment. This is most likely due to better health of the birds in this treatment group.

The effects of Fresh Malt were to the same direction as Dry Malt, but the magnitude of the effects was smaller than in Dry Malt, and remained nonsignificant compared with the control treatment. As for Dry Malt, the feed consumption per pen was higher than in the control group only in the period between days 17-22, suggesting a more rapid recovery from coccidiosis in the barley malt treatments than in the control treatment.

**Table 4.** Feed consumption per pen for the two starter diet periods and two grower diet periods. Significance according to Student's t-test is given as asterisks.

| Diet | Days 1-11 | | Days 11-17 | | Days 17-22 | | Days 22-29 | |
|---|---|---|---|---|---|---|---|---|
| | mean, g | SE | mean, g | SE | mean, g | SE | mean, g | SE |
| Control | 5305 | 305 | 10075 | 344 | 12310 | 1255 | 11958 | 946 |
| Dry Malt | 4594~ | 244 | 8969 | 641 | 13063 | 1189 | 9489* | 505 |
| Fresh Malt | 4851 | 237 | 9169 | 635 | 12886 | 735 | 10011 | 453 |

During the entire 29-day trial, compared with the control group, on average 8.9% and 6.9% less feed was consumed by Dry Malt and Fresh Malt treatments, respectively (**Figure 5**).

## 2.3. Feed conversion ratio

During the pre-challenge period (days 1-11), FCR was 17.2% and 13.8% better than control in Dry Malt and Fresh Malt treatments, respectively ($p < 0.1$). In the first week of coccidiosis, the improvement of FCR was 18.0% for Dry Malt ($p < 0.05$) and 11.8% for Fresh Malt (NS). During the entire starter diet period, Dry Malt improved FCR by 17.6% and Fresh Malt by 12.9% ($p < 0.05$ for both treatments; **Figure 6**).

Between days 17 and 22 (acute coccidiosis), FCR did not differ statistically between the treatments. FCR in the final period (days 22-29) was again significantly improved by Dry Malt (+22.7%, $p < 0.05$). The FCR of the total grower diet period (days 17-29), was numerically but not statistically significantly better for both malt treatments than for the control group (**Figure 7**).

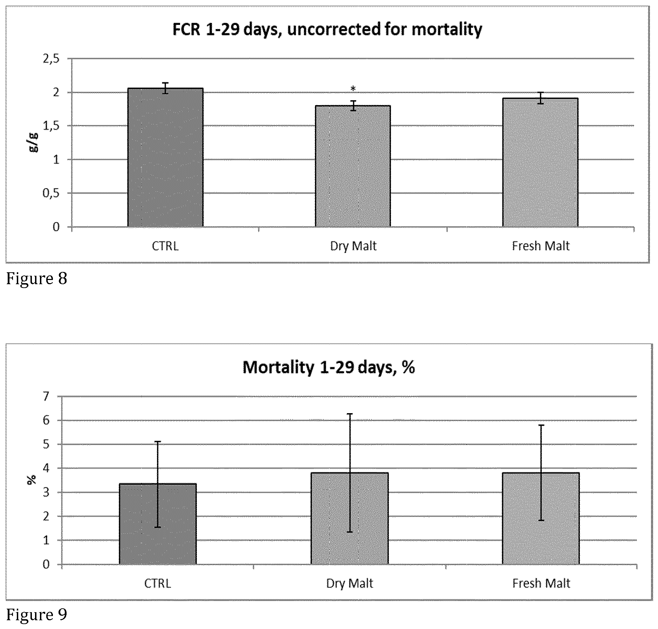

For the entire 29-day trial, the FCR was improved by 12.8% by Dry Malt ($p < 0.05$) and 7.2% by Fresh Malt (NS), as shown in **Figure 8.**

**Table 5.** Feed conversion ratio per pen for the two starter diet periods and two grower diet periods. Significance according to Student's t-test is given as asterisks.

| Diet | Days 1-11 | | Days 11-17 | | Days 17-22 | | Days 22-29 | |
|---|---|---|---|---|---|---|---|---|
| | mean, g/g | SE | mean, g/g | SE | mean, g/g | SE | mean, g/g | SE |
| CTRL | 1.54 | 0.093 | 3.10 | 0.114 | 3.21 | 0.319 | 1.38 | 0.115 |
| Dry Malt | 1.27~ | 0.078 | **2.54*** | 0.239 | 3.30 | 0.279 | **1.06*** | 0.048 |
| Fresh Malt | 1.33~ | 0.067 | 2.73 | 0.187 | 3.52 | 0.273 | 1.16 | 0.63 |

## 2.4 Symptoms of coccidiosis and mortality

*E. maxima* challenge on day 11 resulted in coccidiosis, which decreased the performance of broiler chicks and caused clinical signs of disease like diarrhea, lethargy and lack of appetite. Coccidial lesions and shedding of mucosal epithelium were visible in the intestinal epithelium of most of the birds that were sampled on day 17.

The total mortality remained below 4% for the entire study period (**Figure 9**), despite clear symptoms of coccidiosis especially during the third week of the trial. There were no significant differences between the diet groups during any of the periods (Table 6). Most of the mortalities occurred before the challenge, and were due to inability to start feeding and heart failures, which both are common problems in young broiler chicks.

**Table 6**. Mortality (%) during the two starter diet periods and two grower diet periods. There were no statistically significant differences between the treatment groups.

| Diet | Days 1-11 | | Days 11-17 | | Days 17-22 | | Days 22-29 | |
|---|---|---|---|---|---|---|---|---|
| | mean,% | SE | mean,% | SE | mean,% | SE | mean,% | SE |
| CTRL | 1.67 | 1.091 | 0.83 | 0.833 | 0.89 | 0.893 | 0.00 | 0.000 |
| Dry Malt | 2.86 | 1.983 | 1.02 | 1.020 | 0.00 | 0.000 | 0.00 | 0.000 |
| Fresh Malt | 0.00 | 0.000 | 1.90 | 1.230 | 0.00 | 0.000 | 0.28 | 0.181 |

2.5 Assessment of total bacteria and individual microbial groups in the ileum

ILEUM DAY 17

None of the microbial groups analysed differed between the control and malt treatment with a statistical significance at day 17 due to a high bird-to-bird variation caused by severe *Eimeria* challenge.

ILEUM DAY 29

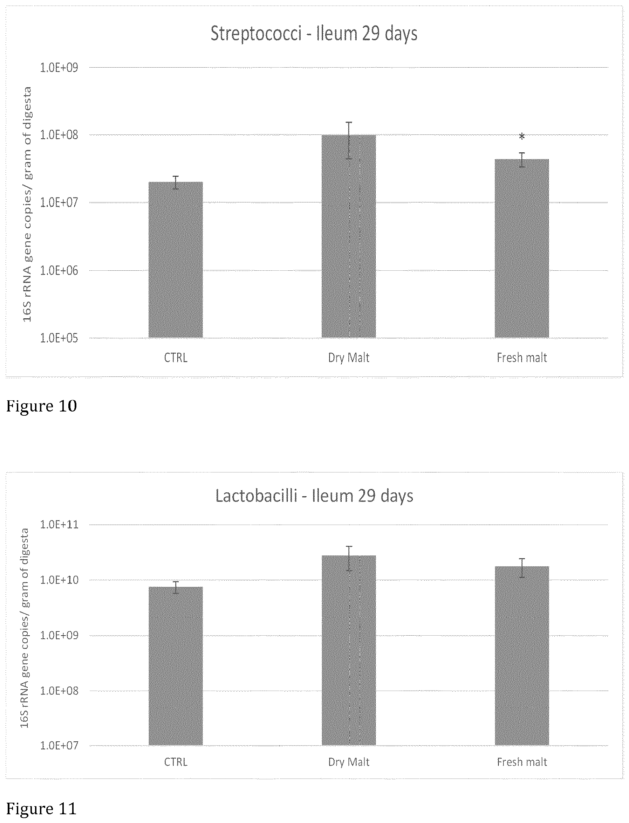

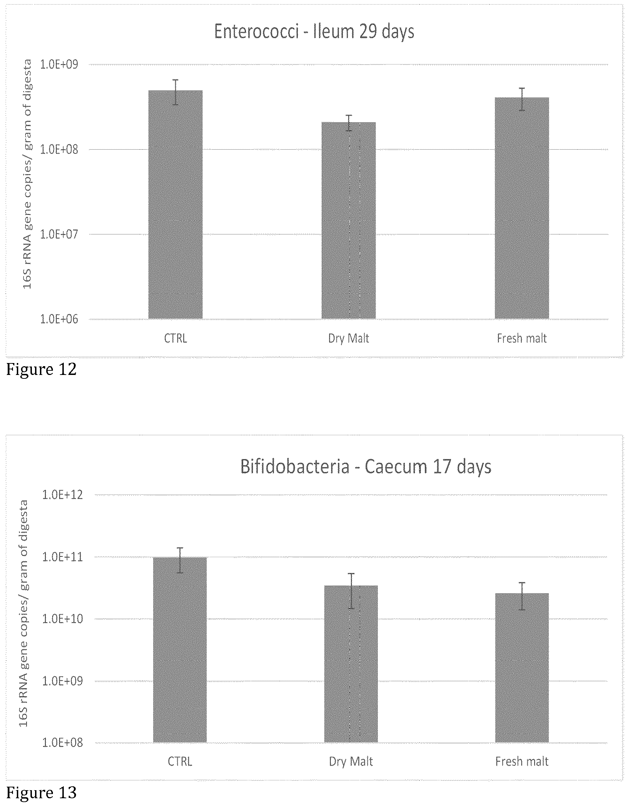

*Lactobacillus* and *Streptococcus* are in many cases dominating bacterial genera in the small-intestine, showing homofermentative lactic acid metabolism. In this trial, the ileal streptococci numbers were significantly higher with Fresh malt on day 29 (Figure 10). Moreover, the Dry malt treatment tended to increase streptococci numbers. However, this result was not statistically significant due to a high bird-to-bird variation. It is noteworthy that the patterns of lactobacilli were rather similar to those of streptococci i.e. both Dry and Fresh malt appeared to increase the numbers of these lactic acid producing bacteria (Figure 11). However, these results were not statistically significant at the risk level of $\alpha = 0.05$.
The metabolism of enterococci is similar to that of the homofermentative lactobacilli and streptococci. A characteristic feature of enterococci is that they tend to possess and transfer antibiotic resistance genes and are thus considered potentially risky group of bacteria if therapeutic or prophylactic antibiotics are being or have been used. Dry malt diet tended to reduce the enterococci numbers (Figure 12). However, this result was not statistically significant.

2.6. Assessment of total bacteria and individual microbial groups in the caecum

CAECUM DAY 17

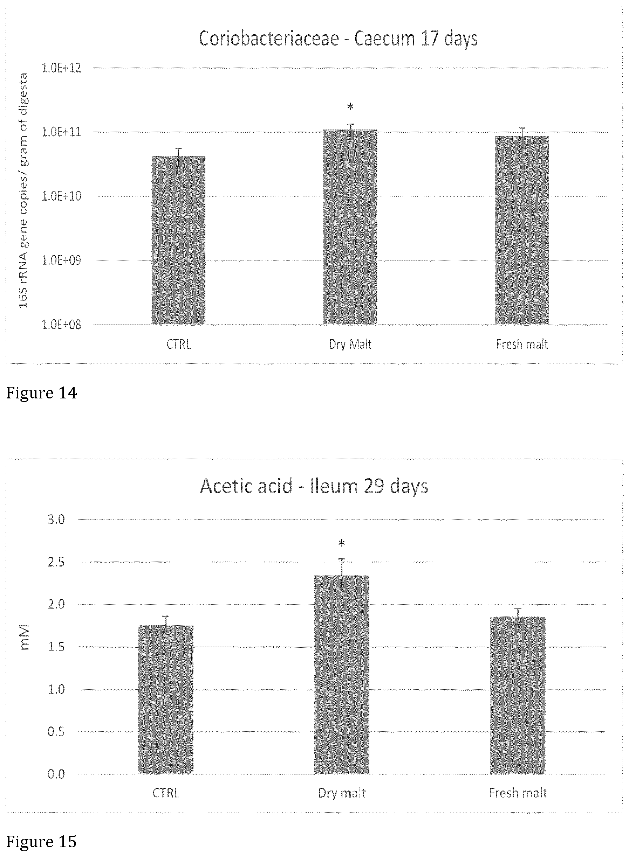

Analysis of the total bacteria measures overall bacterial density in the caecum. Unlike in the small intestine, high bacterial density in the caecum indicates breakdown of feed components unavailable for the digestion system of the host. When bacteria are converting such dietary compounds to short-chain fatty acids that provide energy for the host the apparent metabolisable energy tends to increase and the FCR accordingly improves. In this trial, there were no observable changes in the total caecal bacterial numbers between the treatments.
Bifidobacteria are saccharolytic, and, therefore, their high abundance indicates the presence of metabolisable carbohydrates in the caecum. In commercial farms the abundance of bifidobacteria greatly varies. Even though the high abundance of bifidobacteria in human intestine is considered beneficial, this does not appear be the case in production animals such as broiler chickens. In fact, we have observed that a high abundance of bifidobacteria correlate negatively with the broiler chicken performance. This is possibly due to the fact that it indicates poor capture of carbohydrate bound energy by the host.
In this feeding trial, bifidobacterial numbers tended to decrease with both Dry and Fresh malt inclusion (Figure 13). However, the results were not statistically significant most likely due to a high variation within the treatment groups caused by the coccidiosis challenge.
*Coriobacteriaceae* is a bacterial family belonging to the phylum Actinobacteria, which is known to harbour obligatory anaerobic Gram-positive organisms with chromosomal DNA of high G+C content. *Eggerthella lenta* and *Collinsella aerofaciens* are the best-known representatives of this group, and *C*. *aerofaciens* is an especially well-known member of the intestinal microbiota of mammals. However, these bacteria have been frequently under-represented in 16S rRNA gene sequencing studies of the gut microbial communities. This is most likely due to the PCR conditions applied, which are unfavourable to high %G+C bacteria. The contribution of *Coriobacteriaceae* to the health and performance of broiler chickens has not been thoroughly investigated. However, in recent studies the abundance of *C. aerofaciens* has been shown to correlate positively with human intestinal wellbeing. *Coriobacteriaceae* numbers were increased significantly with the Dry malt diet (Figure 14). A small but not statistically significant increase was also observed with Fresh malt diet. Hence, these results suggest that malt inclusion may have a stimulating effect on the numbers of putatively beneficial coriobacteria species.

CAECUM DAY 29

None of the caecal microbial groups analysed differed between the control and malt treatments with a statistical significance at day 29.

2.7. Profiles of ileal SCFAs

Anaerobic bacterial fermentation in carbohydrate rich habitat such as ileum typically produces SCFAs as metabolic end products, the dominant ones being lactic and acetic acid. In this study, the proportion of acetic acid in the ileal samples was marginal as compared to lactic acid. This suggests that broiler chicken ileum of the challenged birds was dominated by homofermentative lactic acid bacteria, which ferment glucose with lactate as the primary end-product.

ILEUM DAY 17

None of the ileal microbial groups analysed differed between the control and malt treatments with a statistical significance at day 17. The result is in accordance with the microbial results of the same 17-day sampling point.

ILEUM DAY 29

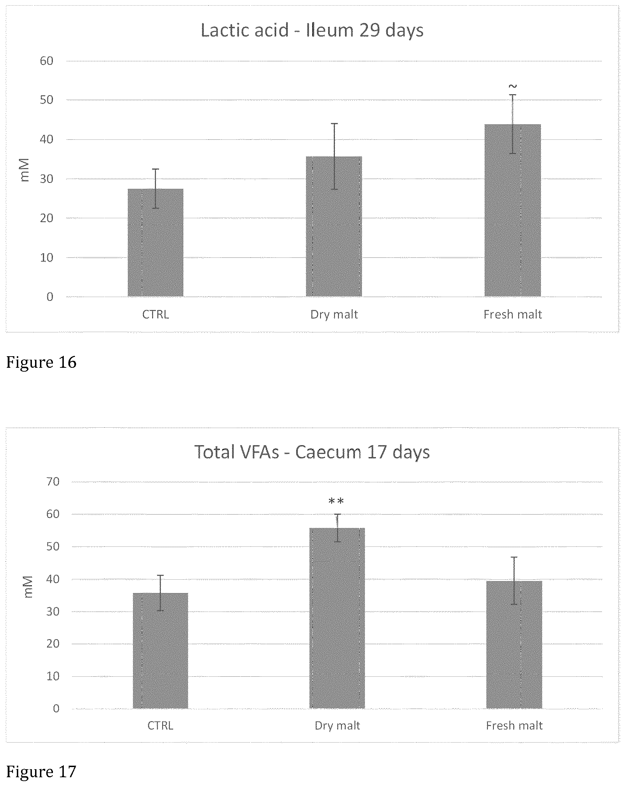

Although the acetic acid levels were low in all treatments, the Dry malt diet showed a significant increasing effect on the on the acetic acid levels at day 29 (Figure 15). Moreover, a trend-like increase of ileal lactic acid was observed especially with Fresh malt diet (Figure 16). These results may indicate the faster recovery of birds on the malt diets from coccidiosis.

CAECUM DAY 17

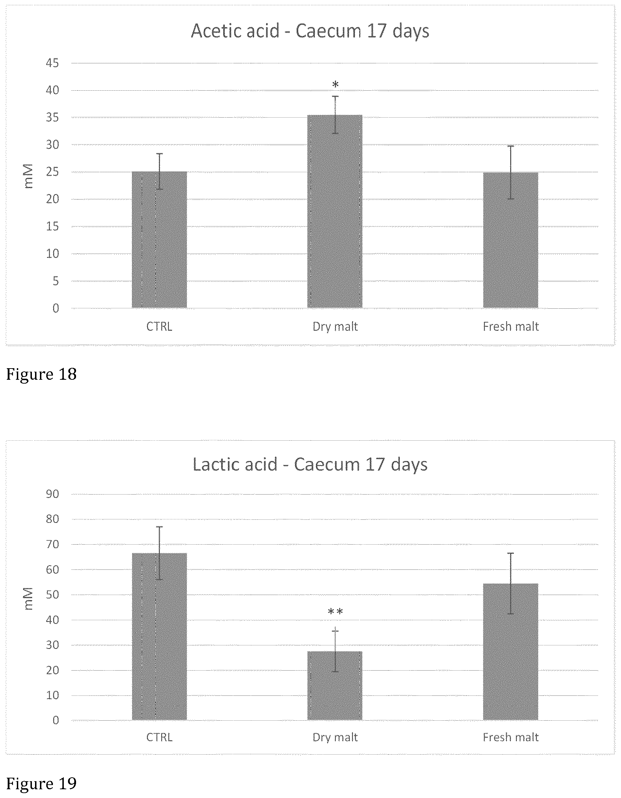

SCFAs function generally as systemic sources of energy in lower intestine. Total acid concentration indicates the overall fermentation activity and the relative abundance of individual acids indicates the respective activity of different fermentation pathways. In the caecum of healthy chickens, the residual concentration of lactic acid is low and the major acids are more reduced SCFAs such as acetic, butyric and propionic acids. The reason why increased volatile fatty acid (VFA) formation (e.g. butyrate, acetate and propionate) in the lower intestine is considered beneficial is the fact that up to 95% of the SCFAs produced during carbohydrate fermentation are utilised by the host, providing a significant proportion of the total energy requirements. Moreover, nutritional disorders and enteritis problems often reflect to the profile of caecal SCFAs, which can therefore be used as a health indicator. As illustrated in Figure 17, Dry malt diet stimulated significantly the formation of VFAs on day 17. Of the individual acids analysed, especially the concentration of acetic acid was increased as compared to the negative control. Similar stimulatory effect was not observed with the Fresh malt diet (Figure 18).

Lactic acid is the strongest of the major SCFAs produced by gut bacteria and therefore it tends to reduce residual pH more than other SCFAs. Lactate produced by lactic acid bacteria is rarely present in the caecum in high quantities, since it is normally rapidly absorbed from the intestine or used as a substrate for lactate-utilising bacteria. However, in certain conditions, such as coccidiosis, abnormal accumulation of lactic acid occurs as a result of carbohydrate malabsorption in the upper intestine and subsequent overgrowth of lactic acid-producing bacteria due to increased delivery of readily metabolised carbohydrates to the lower gut. Consequently, production of lactic acid exceeds the buffering and absorptive capacity of the caecum and the pH of the habitat decreases, with concomitant inhibition of the activity of lactate utilisers. This cascade of events may eventually lead to impaired well-being of the host.

In this study, the lactic acid concentration of the caecal samples was exceptionally high in all samples suggesting a very severe state of coccidiosis infection on day 17. However, the results also showed that lactate levels were significantly lower with Dry malt diet than with the negative control (Figure 19). In addition, the percentage of the lactic acid of the total SCFAs was significantly reduced (data not shown). The suppression of lactate accumulation is considered a very promising result and it indicates along with the increased caecal VFA concentration that Dry malt may be able to reduce the severity of challenge-derived infection and consequently facilitate the absorption of nutrients in the small-intestine.

CAECUM DAY 29

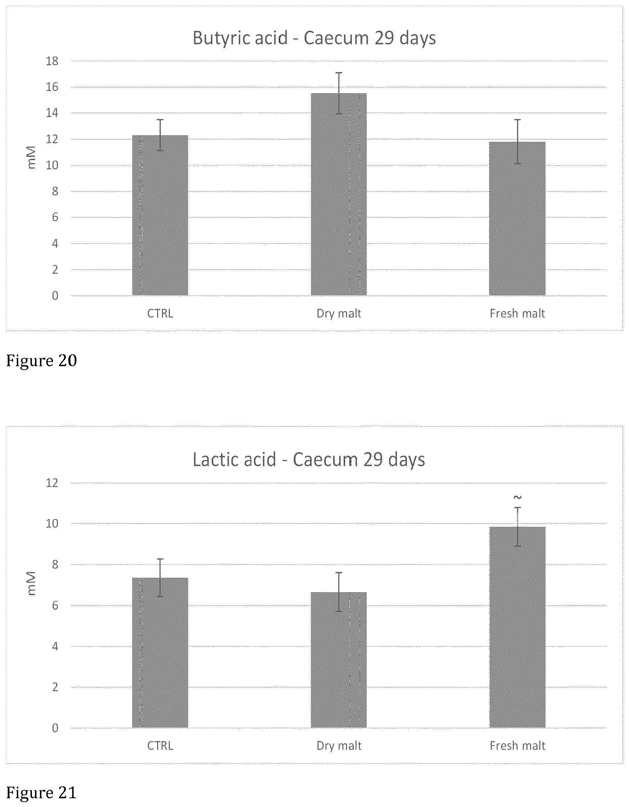

Among the SCFAs butyrate has gained particular interest, since it is known to regulate cellular differentiation and proliferation within the colonic mucosa and is a preferred energy source for epithelial colonocytes. Moreover, butyrate has been shown to inhibit the invasion of *Salmonella enterica* serovar Enteritidis in chicken caecal epithelial cells. Although butyrate production is distributed across many Clostridial clusters of the phylum Firmicutes, it is mainly produced by members of the bacterial families *Lachnospiraceae* and *Ruminococcaceae.* In this study, the caecal butyric acid concentration tended to be higher with Dry malt diet as compared to the negative control at day 29. Similar trend was not observed with Fresh malt diet (Figure 20). Instead, Fresh malt showed a small increase of lactic acid concentration (Figure 21).

It is noteworthy that lactic acid levels were considerably lower on day 29 than on day 17 with all three treatments (Figures 19 and 21). This result strongly suggests that birds were well recovered from the coccidiosis challenge at day 29.

**III. Effect of malt products on the performance of broiler chickens**

**1. Methods**

1.1 Dietary treatments

The diet was wheat-soy based feed for broiler chickens as specified in the Table 7. The starter formulation was used during the first 2 weeks and the grower diet for the following 3 weeks of the trial. The starter diets were prepared as 2 mm pellets and the grower diets as 4 mm pellets. The feeds were manufactured at Nature Resources Institute Finland (previously called Agrifood Research Finland). The trial had 8 dietary treatments (Table 8). Based on the previous analyses with added barley malt, the diets were balanced for metabolisable energy (MJ/kg), crude protein, main limiting amino acids, Ca and P. Malted barley (diastatic power > 700 WK; alpha-amylase >100 DU) replaced equal amount of wheat in the diets. In treatments 6, 7 and 8,malt was included only in the starter diets while in treatments 3, 4 and 5 the malt was fed throughout the trial.

**Table 7.** Basic control diet.

|  | Starter % | Grower % |
|---|---|---|
| Wheat | 56.88 | 66.19 |
| Soybean meal 48 | 35.00 | 27.00 |
| Sunflower oil | 3.90 | 3.00 |
| Monocalciumphosphate | 1.70 | 1.67 |
| Limestone | 1.30 | 1.00 |
| NaCl | 0.42 | 0.42 |
| Mineral premix* | 0.20 | 0.20 |
| Vitamin premix** | 0.20 | 0.20 |
| Methionine | 0.20 | 0.16 |
| L-Lysine HCl | 0.20 | 0.16 |
| ***Total*** | ***100*** | ***100*** |

*) Contents of the mineral premix: calcium 296.8 g/kg, iron 12.5 g/kg, copper 4 g/kg, manganese 25 g/kg, zinc 32.5 g/kg, iodine 0.225 g/kg, selenium 0.1 g/kg.

**) Contents of the vitamin premix: calcium 331.3 g/kg, vitamin A 6000000 IU, vitamin D3 2250000 IU, vitamin E 30000, tocoferol 27270 mg/kg, vitamin K3 1505 mg/kg, vitamin 81 1257.3 mg/kg, vitamin B2 3000 mg/kg, vitamin B6 2009.7 mg/kg, vitamin B12 12.5 mg/kg, biotin 75 mg/kg, folic acid 504 mg/kg, niacin 20072 mg/kg, panthotenic acid 7506.8 mg/kg.

**Table 8.** Test treatments.

| Treatments | Starter diet 0-14 days (kg/tn) | Grower diet 14-35 days (kg/tn) | Replicate pens |
|---|---|---|---|
| 1. Negative control | - | - | 8 |
| 2. Positive control (Rovabio® Excel AP T-Flex) | 0.05 | 0.05 | 6 |
| 3. Malted Barley 5 % | 50 | 50 | 8 |
| 4. Malted Barley 10 % | 100 | 100 | 8 |
| 5. Malted Barley 15 % | 150 | 150 | 7 |
| 6. Malted Barley 5 % | 50 | - | 8 |
| 7. Malted Barley 10 % | 100 | - | 8 |
| 8. Malted Barley 15 % | 150 | - | 7 |

### 1.2 Animals and housing

The 35-day trial was conducted in the broiler house of Alimetrics in Southern Finland, on June-July 2015. The temperature of the hall was raised to 32 °C two days before chicks arrived. Luminosity was adjusted to 20 lux and air humidity was adjusted according to recommendations. Brooder lamps were adjusted to provide extra heating to the chicks during the first week. The temperature was gradually decreased to 22 °C over the rearing period. Automated temperature, ventilation and humidity system was monitored and recorded throughout the experiment on a daily basis. The dark hours were gradually increased within a week, so that light-dark cycle was 18 hours light and 6 hours dark daily.
Birds were housed in 60 open pens (1.125 m$^2$ each) with wood shavings litter. The numbers of replicate pens for each treatment are shown in Table 8.
On day 1 there were 15 birds in each pen and the total number of birds was 900. A veterinarian inspected the health of the chicks in the beginning of the trial. The birds were observed twice a day. Chicks with compromised health were excluded from the trial. Feed and water were available *ad libitum* at all times.

### 1.3 Performance parameters

The birds were weighed on days 0, 14, 21, 28 and 35. Correspondingly, feed intake per pen and the feed conversion ratio (FCR) were measured for the following periods:

- Days 0-14, early starter diet period
- Days 14-21, early grower diet period
- Days 21-28, mid grower diet period
- Days 28-35, late grower diet period

Dead birds and birds euthanised because of health problems were weighed. Daily mortality was recorded. FCR was calculated both corrected and uncorrected for mortality.

### 1.4 Statistical analysis

Performance data was analysed by Dunnett's (2-sided) test using SPSS statistical software package (version 22). The treatment group 1 (unamended diet) was used as a control the test treatments were compared against. Obtained p-values smaller than 0.1 are shown as symbols in the graphs.

### 2. Results

#### 2.1 Effect of barley malt on body weight and weight gain of broiler chickens

There were no statistically significant differences in body weight or weight gain between the treatments on any growing periods, though there were similar trend-like dose effects with malted barley, as was found in previous trial.

2.2 Effect of malt on feed consumption

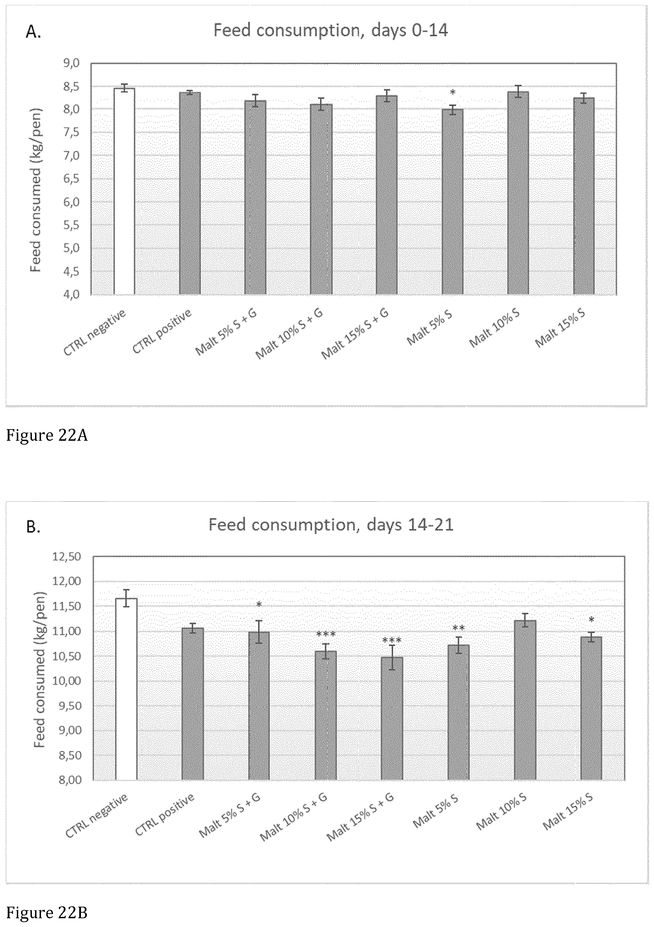

During the early starter diet period 0-14 days malted barley tended to decrease feed consumption especially at the lowest dose (50 kg/tn) (**Figure 22A**).

Decreased feed consumption was clearer during the early grower diet period 14-21 days, when the differences were statistically significant with all doses of malted barley in the grower feeds. Even though malt was added only in starter feed, depression in feed intake continued after product withdrawal at the lowest and highest dose of malted barley (**Figure 22B**).

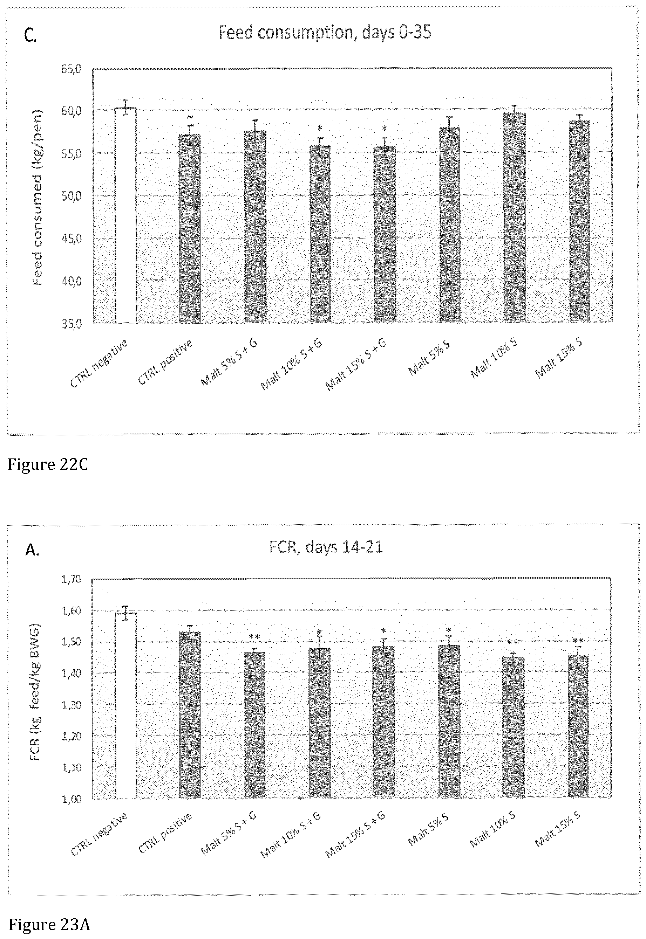

Malt at 5 % and 15 % dose decreased feed consumption statistically significantly during the whole trial period of 0-35 days if added in both starter and grower diet (**Figure 22C**).

2.3 Effect of malt on feed conversion efficiency

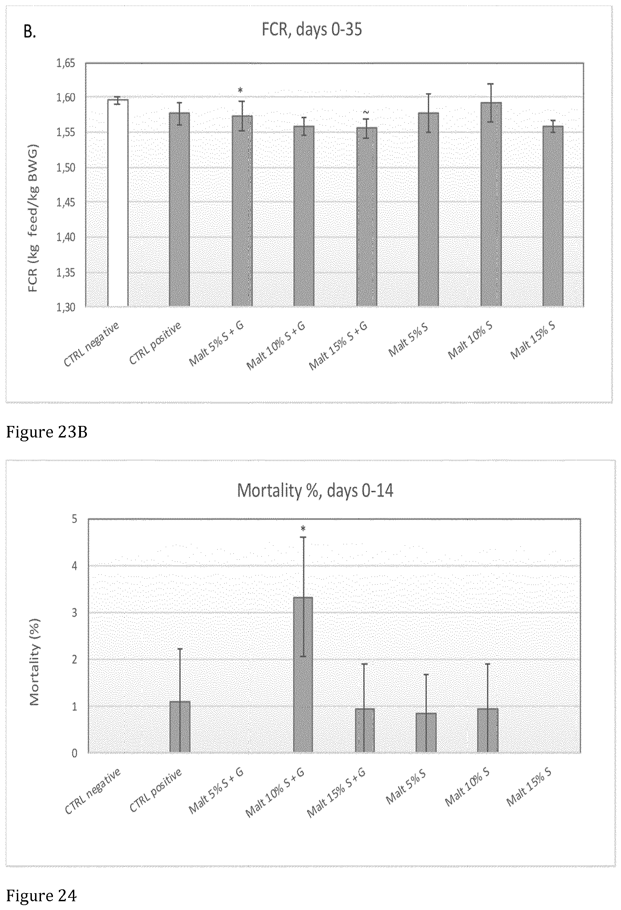

During the starter diet period (0-14 days) there were no statistically significant differences in FCR between the treatments. The most effects on FCR were seen on early grower diet period (14-21 days). Malt inclusion at all doses improved FCR statistically significantly and the improvement was practically unaffected by dose. Fifty kilograms of product per ton showed improvement equal to the three times higher dose (**Figure 23A**). When calculated for the entire 35-day growth period, a better FCR was measured when malt was present also in the grower feeds. (**Figure 23B**).

2.4 Effect of malt on mortality

Malt at 100 kg/tn (treatment 4) dose appeared to increase mortality of broiler chickens in starter diet period. However, this is most likely a random effect since no such effect was seen in treatment 7, which had identical diet during the starter period (**Figure 24**).

Starter period mortality affected also mortalities calculated for the whole 35- days trial period. This measured mortality means in practice that on the average 0.7 to 1 birds died from each pen of 15 birds.

2.5 Effect of malt on mortality-corrected feed conversion efficiency

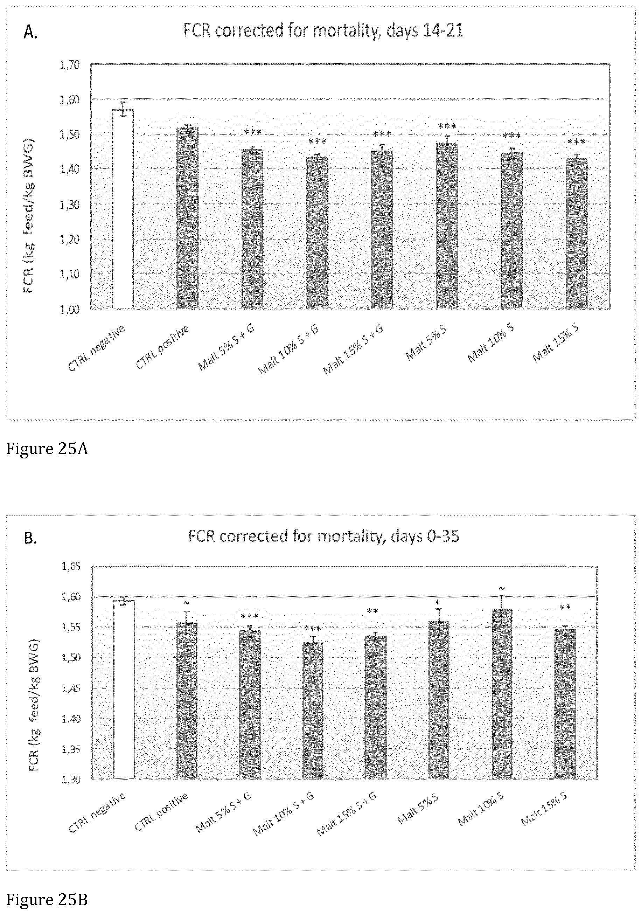

There were no statistically significant differences in mortality corrected FCR during the starter diet period (0-14 days). Malt improved statistically significantly the mortality corrected FCR during the early grower feed period with all doses (p<0.001). FCR improvement was not affected by the product withdrawal after the starter diet period in treatments 6, 7 and 8 (**Figure 25A**).

During the entire 35-day growth period malt improved mortality corrected FCR with all doses. Statistically most significant improvements were when malted barley was present in feed during the whole trial period. However, the positive effect appeared to be there also when malt was fed only the first two weeks. (**Figure 25B**).

IV. **Effect of malted grain on the performance of broiler chickens in the necrotic enteritis challenge model**

**1. Materials and methods**

1.1 Dietary treatments

The diet was wheat-soy based feed for broiler chicks as specified in the Table 9. The starter formulation was used during the first 3 weeks and the grower diet for the following 2 weeks of the trial. The starter diets were prepared as 2 mm pellets and the grower diets as 4 mm pellets. The feeds were produced at Nature Resources Institute Finland.

**Table 9.** Basic control diet.

| | Wheat-soy % starter diet (d 0-21) | Wheat-soy % grower diet (d 21-35) |
|---|---|---|
| Wheat | 58.16 | 66.22 |
| Soybean meal 48 | 33.30 | 25.10 |
| Sunflower oil | 4.20 | 4.70 |
| Monocalciumphosphate | 1.46 | 1.22 |
| Limestone | 1.48 | 1.32 |
| NaCl | 0.45 | 0.48 |
| Mineral premix* | 0.20 | 0.20 |

(continued)

| | Wheat-soy % starter diet (d 0-21) | Wheat-soy % grower diet (d 21-35) |
|---|---|---|
| Vitamin premix** | 0.20 | 0.20 |
| DL-Methionine | 0.27 | 0.27 |
| L-Lysine HCl | 0.19 | 0.24 |
| Threonine | 0.09 | 0.05 |
| Total | 100 | 100 |
| DM | 0.89 | 0.89 |
| Lys | 1.29 | 1.12 |
| Met+Cys | 0.95 | 0.88 |
| Met | 0.60 | 0.56 |
| Thr | 0.92 | 0.76 |
| Ca | 0.93 | 0.80 |
| AvP | 0.40 | 0.35 |
| Na | 0.18 | 0.19 |
| MJ/kg | 12.35 | 12.80 |
| CP g/kg | 229.20 | 199.69 |

*) Contents of the mineral premix: calcium 296.8 g/kg, iron 12.5 g/kg, copper 4 g/kg, manganese 25 g/kg, zinc 32.5 g/kg, iodine 0.225 g/kg, selenium 0.1 g/kg.

**) Contents of the vitamin premix: calcium 331.3 g/kg, vitamin A 6000000 IU, vitamin D3 2250000 IU, vitamin E 30000, tocopherol 27270 mg/kg, vitamin K3 1505 mg/kg, vitamin B1 1257.3 mg/kg, vitamin B2 3000 mg/kg, vitamin B6 2009.7 mg/kg, vitamin B12 12.5 mg/kg, biotin 75 mg/kg, folic acid 504 mg/kg, niacin 20072 mg/kg, pantothenic acid 7506.8 mg/kg.

There were 5 dietary treatments with 12 replicate pens (Table 10). Based on the previous analyses of malted barley the diets were balanced for metabolisable energy (MJ/kg), crude protein, main limiting amino acids, Ca and available P. Barley Malt (diastatic power >700 WK, alpha-amylase > 100 DU) added replaced equal amount of wheat in the diets. The coccidiostat used as a positive control was ionoforic Monteban G100 (10% Narasin, an active antimicrobial).

Table 10. Dietary treatments

| Tr # | Treatments | pens | Replicate Birds/pen | Dose of HDBM kg/tn (0-35 days) |
|---|---|---|---|---|
| 1. | Control negative | 12 | 11 | - |
| 2. | Control positive /coccidiostat | 12 | 11 | - |
| 3. | Barley Malt 5% | 12 | 11 | 50 |
| 4. | Barley Malt 10% | 12 | 11 | 100 |
| 5. | Barley Malt 15% | 12 | 11 | 150 |
| | | 60 | | |

1.2 Animals and housing

The 35-day trial was conducted in the broiler house of Alimetrics in Southern Finland, on May-June 2016. The temperature of the hall was raised to 32°C two days before chicks arrived. Luminosity was adjusted to 20 lux and air humidity was fixed as appropriate. Brooder lamps were adjusted to provide extra heating to the chicks during the first week. The temperature was gradually decreased to 22°C over the rearing period. Temperature, ventilation and humidity were monitored and recorded throughout the experiment on a daily basis. The dark hours were gradually increased within a week, so that light-dark cycle was 18 hours light and 6 hours dark daily.

Newly-hatched, male Ross 308 broiler chicks were allocated into 60 pens of 1.125 m$^2$ with wood shavings/chopped straw litter. In the beginning of the trial there were 11 birds in each pen and the total number of birds was 660. The chicks had free access to feed and drinking water throughout the trial. A veterinarian checked the health of the chicks in the beginning of the trial. Initially, the birds were observed twice a day and after the *Cl. perfringens* challenge, when the symptoms were the most severe, birds were observed once every four hours. Chicks with compromised health were euthanised.

### 1.3 Inoculation with *Eimeria maxima* and *Cl. perfringens*

On day 13, the chicks were individually inoculated with 5 000 oocysts of *E. maxima* (Biopharm, Czech Republic). The size of inoculum providing a clear but subclinical effect on performance was chosen. The oocysts were suspended in tap water one day before inoculation to improve the excystation efficiency. The defined amount of oocysts were pipetted into the beak of each chick in 300 $\mu$l of suspension, which the chicks could easily swallow.

On day 17 each broiler chicken was orally inoculated with a fresh culture of *Cl. perfringens* ($0.5 \times 10^9$ live cells). The strain of *Cl. perfringens* was originally isolated from ileal contents of NE -affected broiler chicks. The strain has been repeatedly found to cause NE provided that the chickens are sensitised by *E. maxima* challenge. Dead birds and birds euthanised because of health problems were recorded and weighed.

### 1.4 Performance parameters

The chicks were weighed on days 0, 13, 21 and 35. Correspondingly, feed intake per pen and the feed conversion ratio (FCR) were measured for the following periods:

- Days 0-13, period before challenges,
- Days 13-21, period of *E. maxima* and *Cl. perfringens* inoculations,
- Days 21-35, period after inoculations.

### 1.5 Sampling

On day 21, two randomly selected birds from each pen were weighed individually, euthanized, abdominal cavity opened, and ileum removed for analysis. Jejunum was opened for scoring NE lesions using scale from 0 to 6 as described by Shojadoost et al. (Veterinary Research 2012, 43:74).

### 1.5 Microbial analysis of ileal digesta samples

A panel of quantitative real-time PCR (qPCR) analyses in ileal samples was carried out. From the 3 treatment groups listed below a total of 72 ileal samples were subjected to the analysis described below.

1 Negative CTRL diet,
2. Positive CTRL diet (ionoforic coccidiostat; Narasin as the active antimicrobial),
3. Barley Malt 10 % (100 kg/tn).

Initially, samples were washed to remove solid particles and complex polysaccharides, which disturb the subsequent DNA purification process and the downstream qPCR applications. The liquid phase was subjected to differential centrifugation for collecting the bacterial cells. The cell walls of the bacterial cells were disrupted, and the chromosomal DNA was quantitatively purified using the Alimetrics in-house protocol, which is optimised and validated for the bacterial DNA extraction from chicken ileal samples. Consequently, a total of 72 ileal DNA samples were subjected to qPCR analyses as specified below.

The qPCR system is based on the detection and quantification of a fluorescent reporter. This signal increases in direct proportion to the amount of PCR product in the reaction. By recording the amount of fluorescence emission (SYBR Green chemistry) at each cycle, it is possible to monitor the PCR reaction during exponential phase where the first significant increase in the amount of PCR product correlates to the initial amount of target template.

In this study, all results are expressed as target $\log_{10}$ gene copies per 1 gram of ileal digesta.

The following qPCR assays were applied to digesta DNA samples (target gene in parenthesis):

1) Total eubacteria (16S rRNA gene),
2) *Clostridium perfringens* (plc; alpha toxin encoding gene),
3) *Eimeria* spp. (5S rRNA gene).

### 1.6 Statistical analysis

Statistical analysis of the qPCR data consisted of two-tailed Student's t-tests for all measured parameters. The tests were performed against the Negative CTRL diet just as Dunnett's post-hoc test would have been used, but t-test was chosen to let the individual treatments be independent of the other treatments tested simultaneously.

Significance according to Student's t-test:

p-value < 0.1 ~

p-value < 0.05 *

p-value < 0.01 **

p-value < 0.001 ***

**2. Results**

2.1 Mean body weight

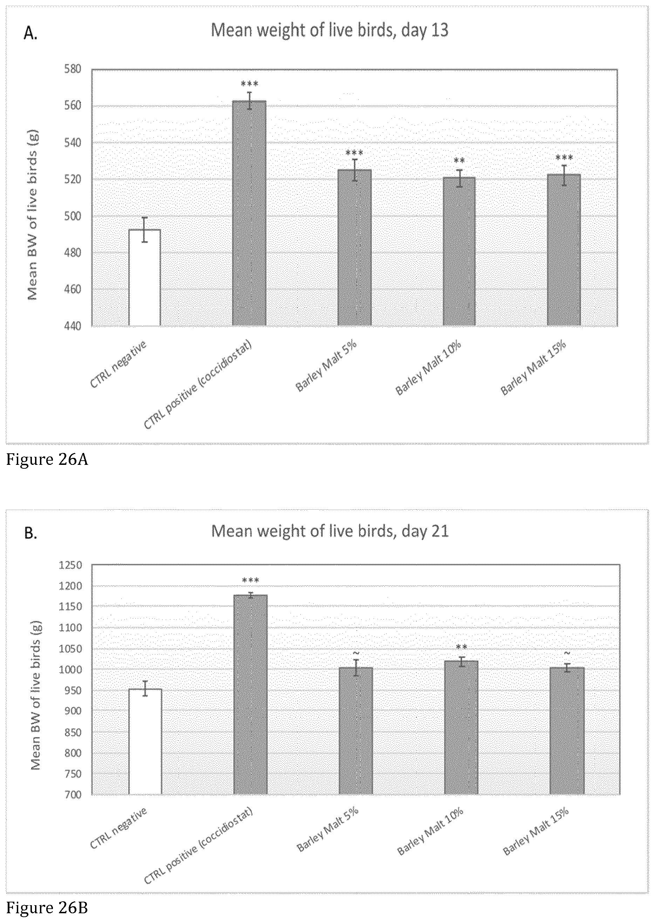

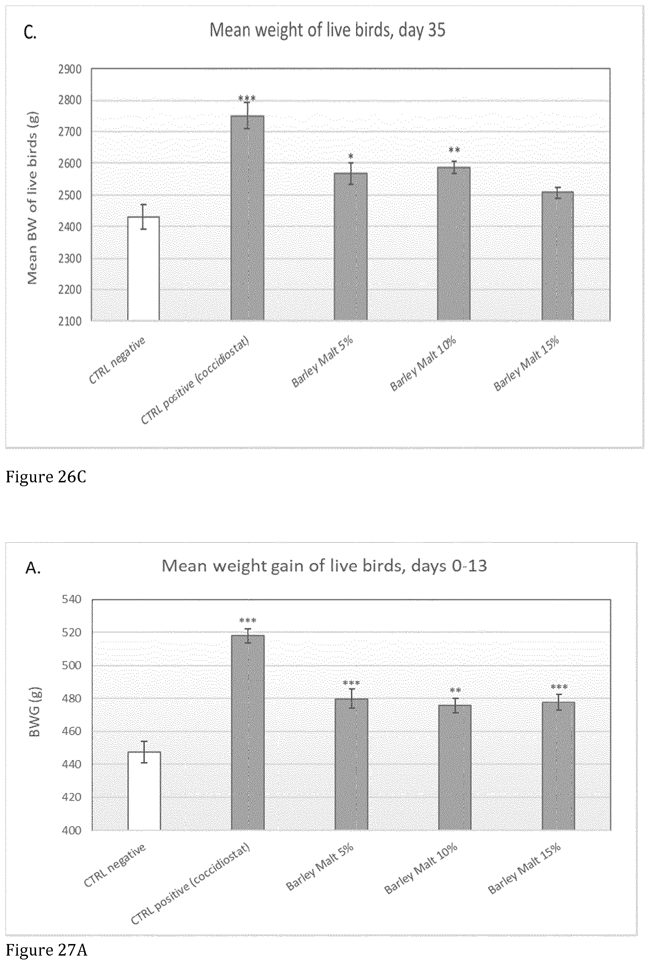

- On day 13, before the challenges, Barley Malt increased mean weight of birds statistically significantly at all doses. The improvement was 30 g if compared to the negative control group (Figure 26A). With the coccidiostat the improvement on mean weight was even bigger, more than 60 g. The fact that coccidiostat had this significant effect prior to challenges suggests that there is a natural microbial challenge in the trial facility.
- After the *Eimeria* and *Cl. perfringens* inoculations and at the day of most severe symptoms on day 21, all doses of Barley Malt gave positive effects on mean weight. The improvement was most significant at 10% dose (64 g) (Figure 26B).
- After recovery of the birds from the challenges at the end of the 35-day trial, Barley Malt at 5 % and 10 % dose improved mean body weight statistically significantly (~150 g). With coccidiostat the improvement was more than 300 grams when compared to negative control (Figure 26C).

2.2 Mean body weight gain

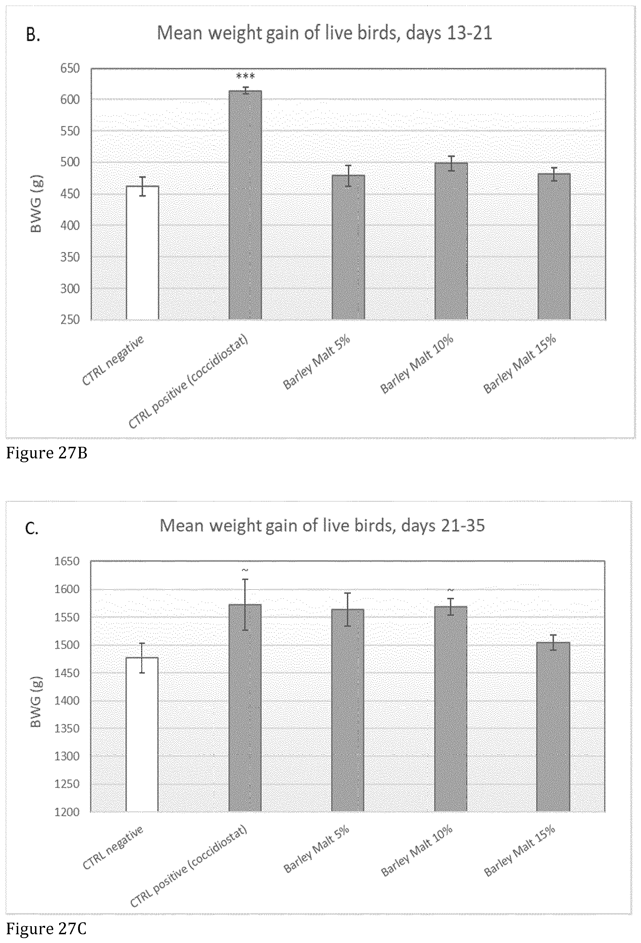

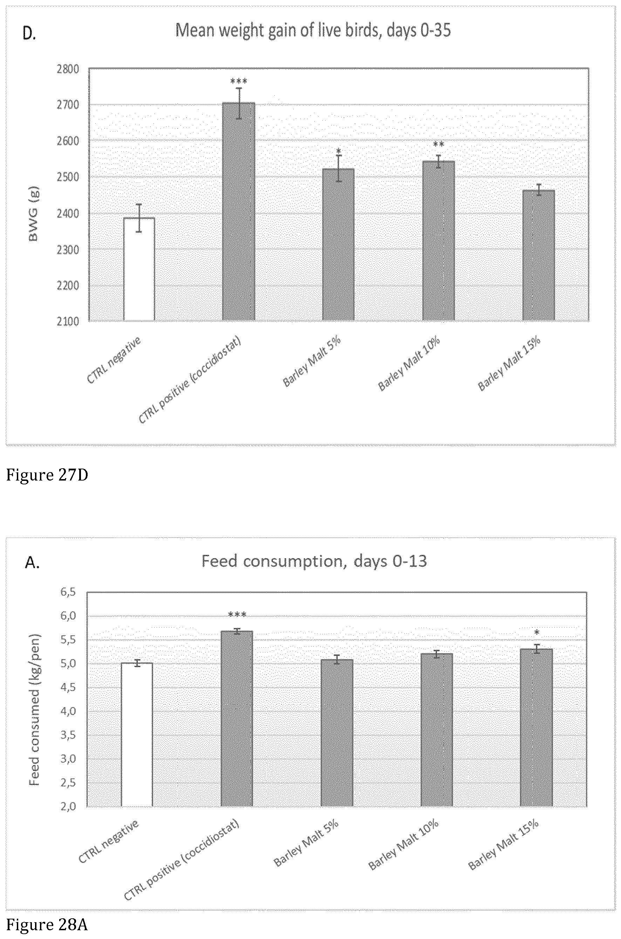

- During the days 0-13, period before the microbial challenges, all doses of Barley Malt boosted the weight gain significantly (Figure 27A).
- After the *Eimeria* and *Cl. perfringens* inoculations and during the phase of most severe symptoms of NE (days 13-21), none of the Barley Malt doses improved the weight gain of the birds statistically significantly. Numeric improvement was observed, especially with the 10 % dose (Figure 27B). With Narasin the improvement was expectedly statistically significant.
- During the recovery phase of the trial (days 21-35) the mean weight gain tended to improve at Barley Malt doses 5 and 10 % (Figure 27C). Numerically, the improvement was similar to the positive control.
- During the whole 35-day growth period the cocciodiostat and Barley Malt at 5 % and 10 % dose improved the mean weight gain statistically significantly (Figure 27D). The magnitude of improvement with Barley Malt was -150 grams.

2.3 Feed consumption

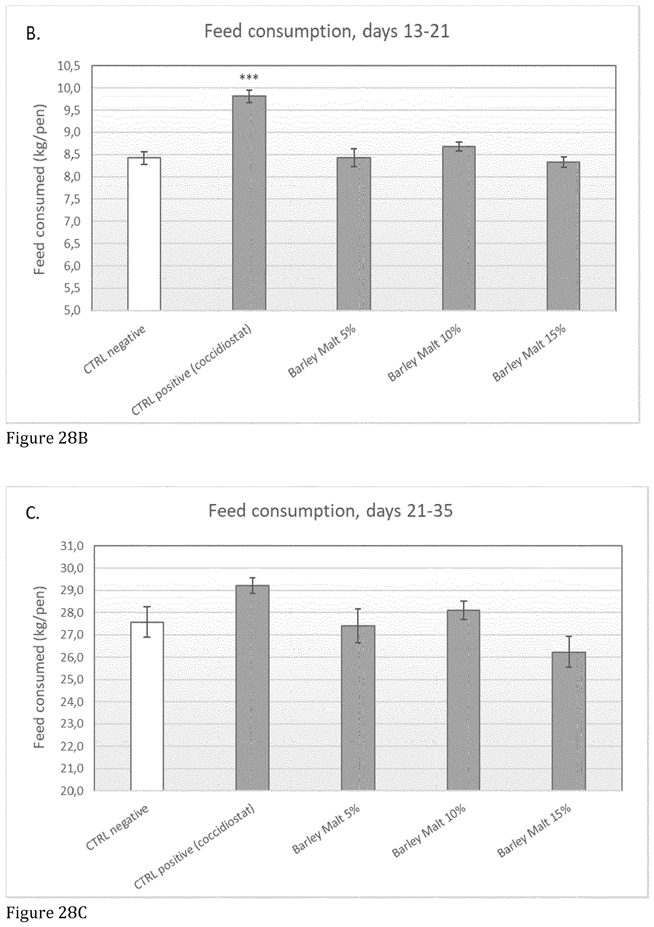

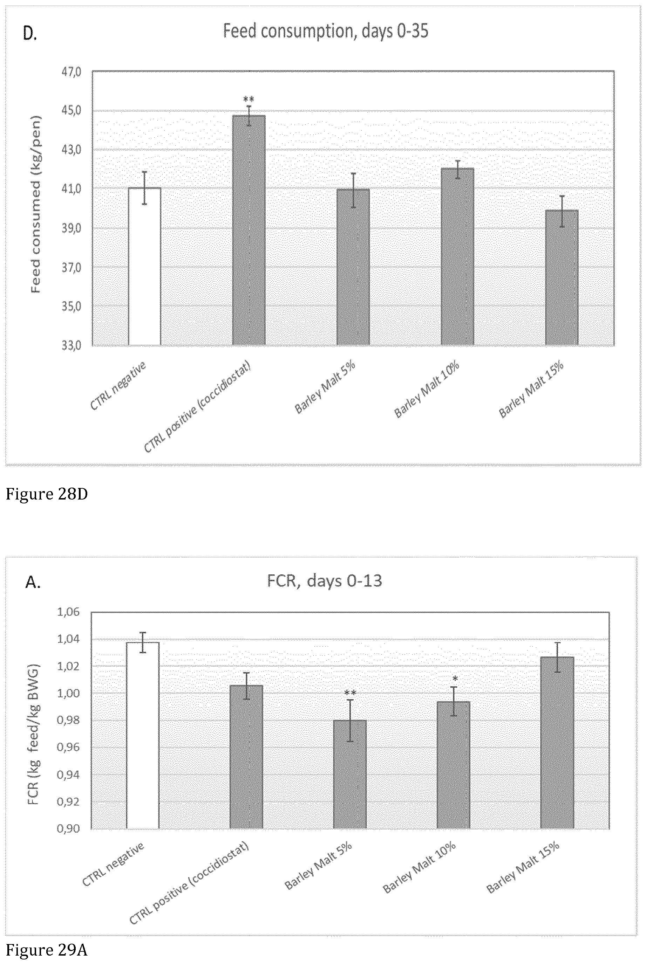

- During the pre-challenge period 0-13 days coccidiostat and Barley Malt at 15 % increased feed consumption statistically significantly. The mean feed consumption seemed to correlate positively with the dose of Barley Malt despite of the fact that nutrient and energy values in feed were balanced (Figure 28A).
- Only in the coccidiostat group feed consumption increased statistically significantly during the days after *Eimeria* and *Cl. perfringens* inoculation, 13-21 days (Figure 28B).
- During the recovery phase of the trial (days 21-35) neither coccidiostat nor Barley Malt affected feed consumption significantly, although there was a numerical increase with the coccidiostat (Figure 28C).
- During the whole 35-day growth period only the coccidiostat diet increased feed consumption statistically significantly (Figure 28D).

2.4 Feed conversion ratio

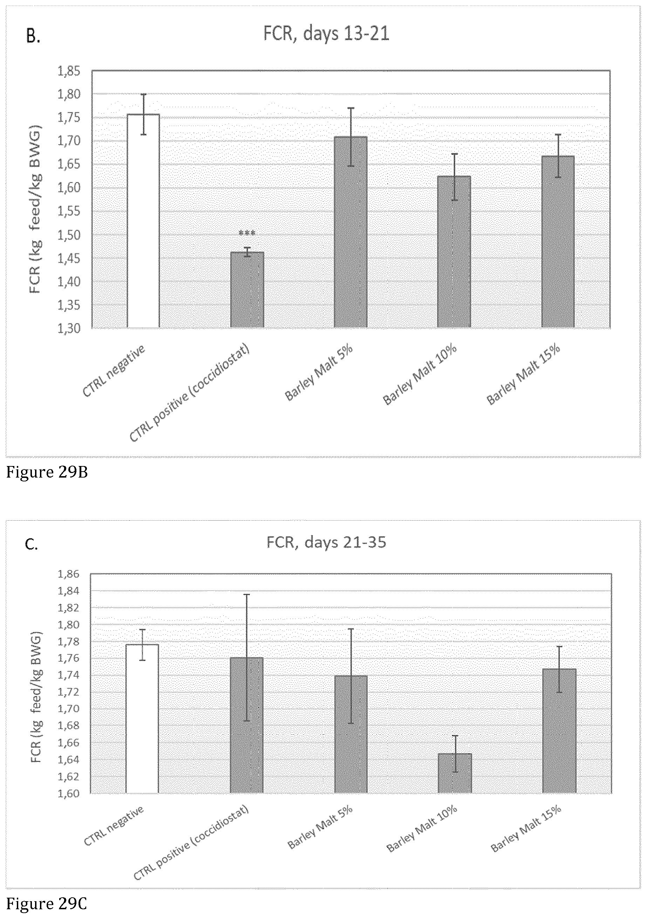

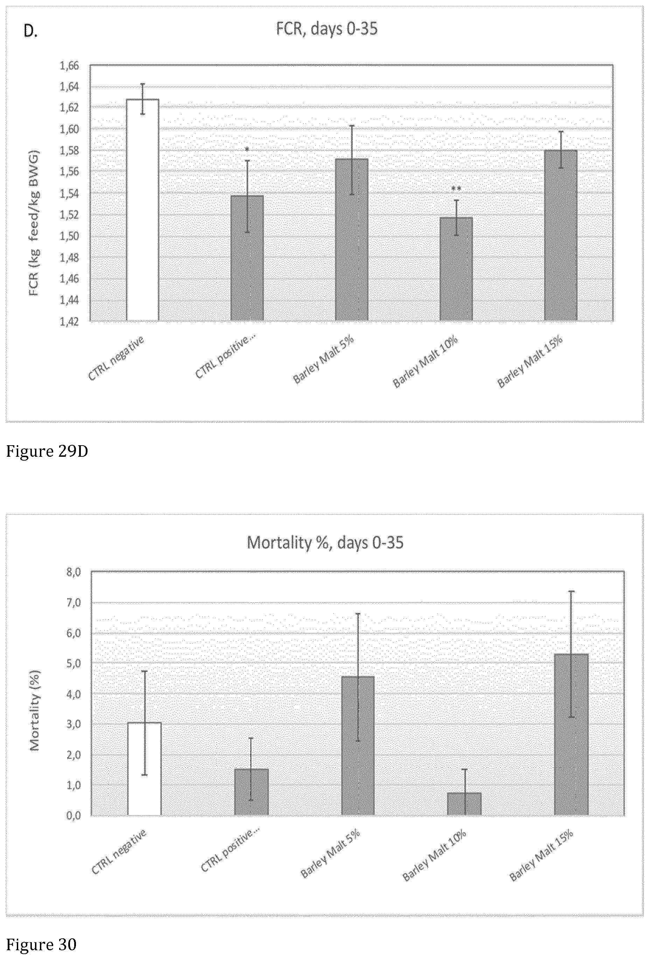

- Barley Malt at 5 and 10 % dose improved FCR statistically significantly during the period before inoculations, days 0-13. The improvement was ~6 points (Figure 29A).
- During the period of the most severe symptoms of NE (days 13-21) the feed conversion ratio improved statistically significantly only with the coccidiostat amendment (Figure 29B).
- During the recovery phase (days 21-35) Barley Malt at 10 % dose improved FCR numerically but not with statistical significance (Figure 29C).
- During the whole 35-day trial period Barley Malt at 10 % dose improved FCR statistically significantly, the improvement being of great practical significance, 0.11 kg feed/kg body weight (also referred to as 11 points). The effect of malted Barley exceeded also the positive effect of the coccidiostat (Figure 29D).

2.5 Mortality

- There were no differences in mortality between the treatments during any growth period of the trial (Figure 30).

2.6 Mortality-corrected feed conversion ratio

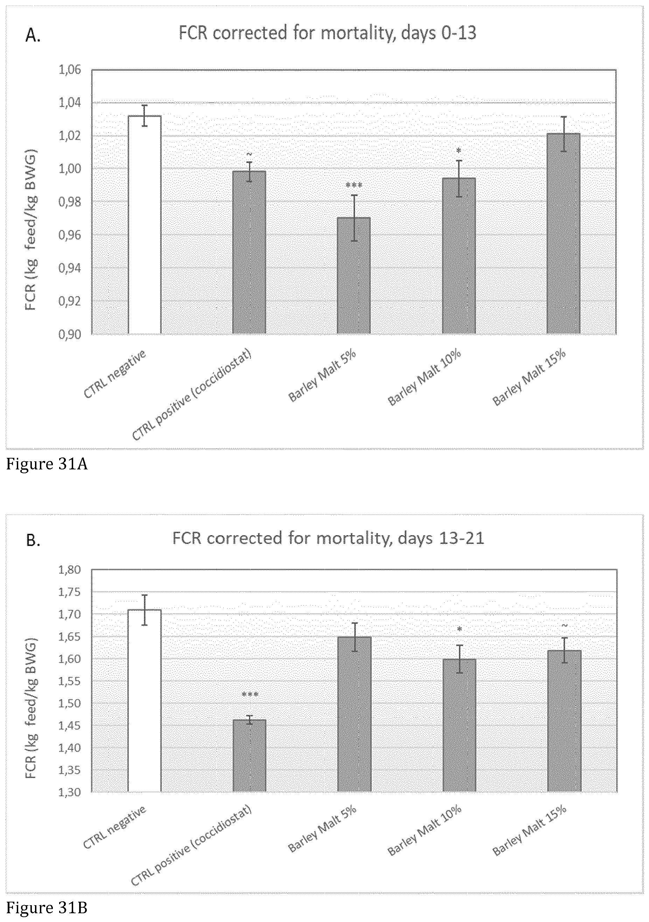

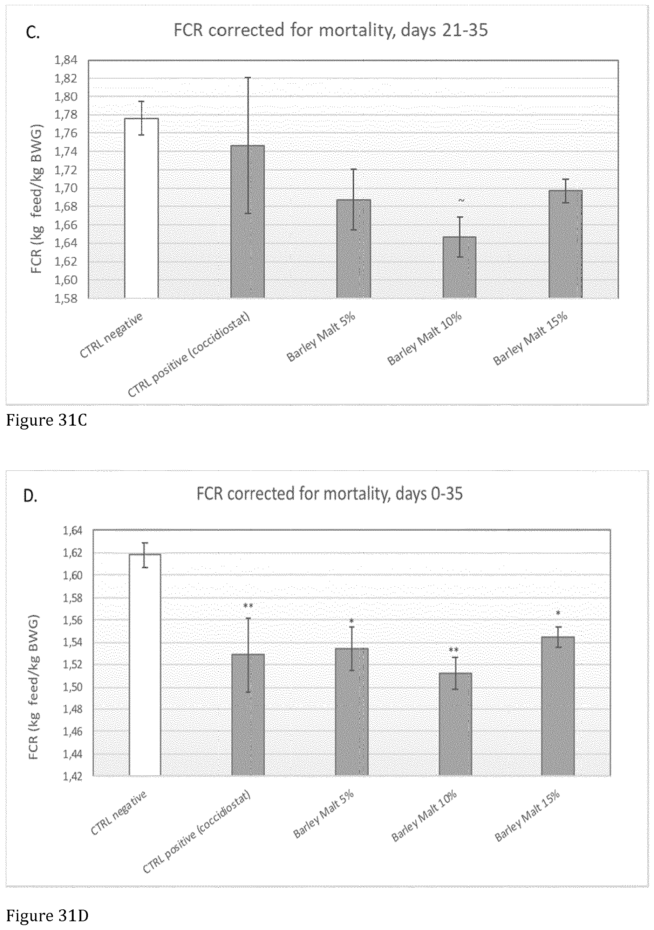

- During the first growth period of the trial, 0-13 days, Barley Malt at 5 % dose improved mortality-corrected feed conversion ratio statistically significantly with 6 points. Also, the coccidiostat and Barley Malt at 10 % dose had positive effect on mortality-corrected FCR (Figure 31A).
- After the *Eimeria* and *Cl. perfringens* inoculations and during the severe phase of NE-symptoms (days 13-21), coccidiostat improved mortality-corrected FCR significantly, as well as Barley Malt at 10 and 15 % doses. The numeric magnitude of the positive effects by the 10% malt inclusion was significant, ~11 points (Figure 31B).
- The effect on mortality-corrected FCR of the 10 % dose of Barley Malt maintained significant for the rest of the trial (21-35 days) (Figure 31C).
- During the whole 35-days NE-challenge trial, feed conversion ratio with mortality correction improved statistically significantly with Barley Malt at all doses. The magnitude of effect was equal to that obtained with the coccidiostat (Figure 31D). At 10 % dose of Barley Malt, the improvement was 11 points.

2.7 Jejunal NE-lesions on day 21

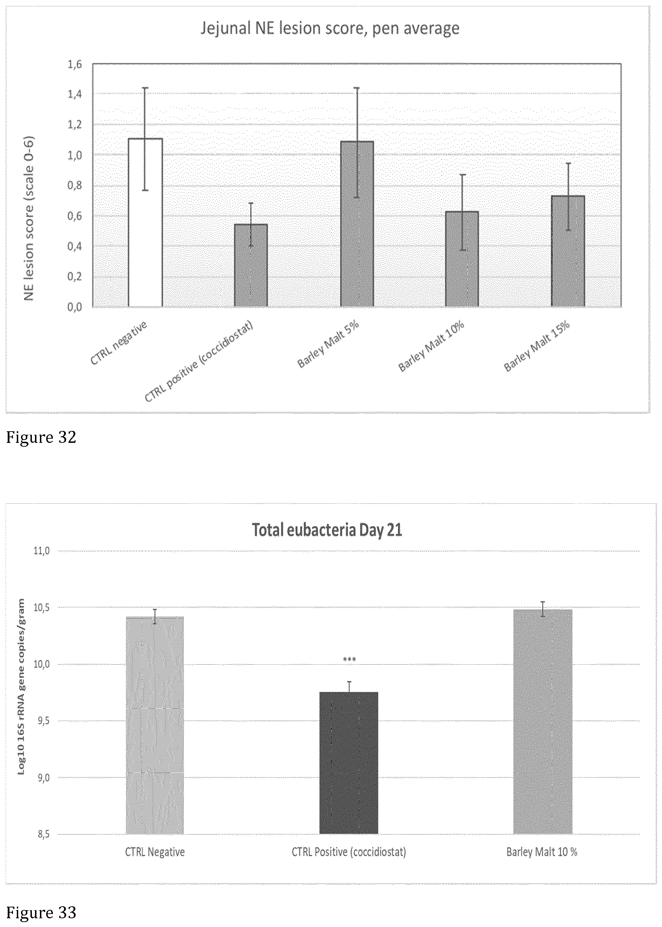

- There were no statistically significant diet effects on necrotic enteritis caused jejunal lesions on day 21 (Figure 32).

2.8 Assessment of total bacteria and individual microbial groups in the ileum

It is generally accepted that bacteria compete directly with the host for specific nutrients in the chicken small-intestine. Hence, overgrowth of bacterial populations may reduce nutrient capture by the host thus impairing body weight gain and feed conversion ratio. On the other hand, high bacterial levels in small-intestine may increase barrier effect against pathogenic bacteria. In addition, lactate secreted by lactic acid bacteria tends to lower the pH of the intestinal tract, which impairs the growth of acid sensitive pathogens such as *Escherichia coli* and *Salmonella enterica.*

Total eubacteria - Day 21

As illustrated in Figure 33, the total bacterial numbers in ileal digesta samples were significantly lower with Positive CTRL diet, which showed nearly 80% lower absolute microbial quantities as compared to the Negative CTRL diet at day 21. This result strongly suggests that the coccidiostat applied acted as a general inhibitor of ileal microbiota in the trial.

The results also showed that Barley Malt 10% did not have an effect on the absolute quantities of bacterial numbers at day 21 sampling point. This was expected as malt contains nutritive rather than inhibitory compounds.

*Eimeria* spp. and *Clostridium perfringens* - Day 21

Coccidiosis of chickens is an intestinal disease caused by parasitic protozoa of the genus *Eimeria*. Transmission occurs via the ingestion of infective oocysts that have sporulated over several days following their excretion in the faeces. The epithelial damage by *Eimeria* induces leakage of plasma proteins; moreover, the coccidial infection enhances mucus production. Both effects provide an increased nutrient availability for pathogenic *Cl. perfringens* to grow, leading to necrotic enteritis.

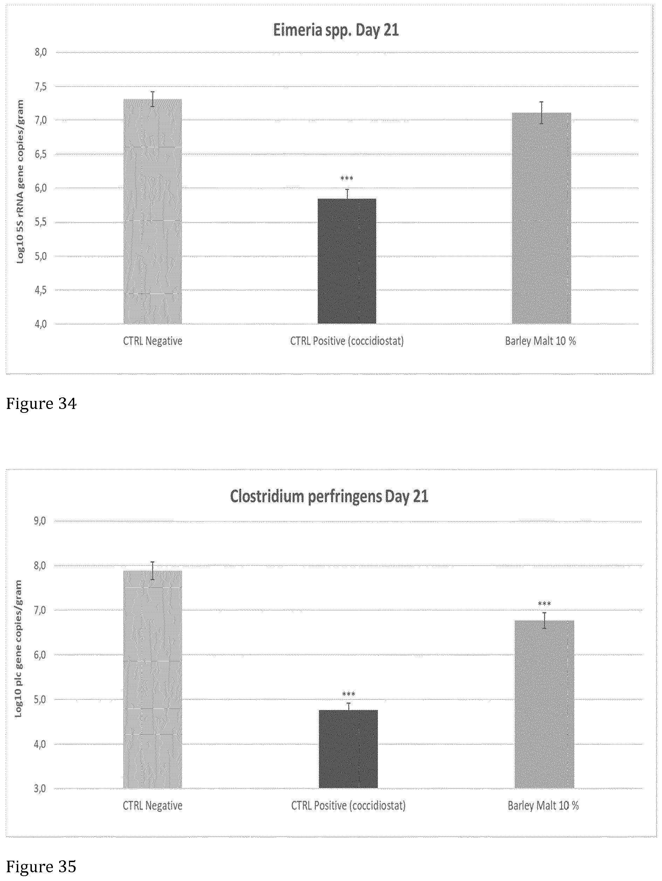

As illustrated in Figure 34, *Eimeria* genomes were detected at 21-day sampling point with all three treatment groups analysed. As expected, Positive CTRL inhibited significantly the *Eimeria* growth, while Barley Malt 10% did not significantly differ from the Negative CTRL. In a magnitude, the *Eimeria* suppression with Positive CTRL was over 95% from the Negative CTRL.

Figure 35 shows that both Positive CTRL and Barley Malt 10% treatments inhibited the Cl. perfringens growth with a statistical significance. In a magnitude, the rate of inhibition with Positive CTRL and Barley Malt 10% was over 99% and 92% from the Negative CTRL, respectively.

The inhibitory effect of Positive CTRL was expected, since it was shown to suppress generally the ileal microbiota (see Figure 33). On the other hand, the inhibitory mode-of action of Barley Malt 10% remains unknown. It is possible that the inclusion of Barley Malt in the diet reduces the intestinal epithelial damage during the coccidiosis, which consequently would decrease the availability of animal protein based substrate for the proliferation Cl. perfringens.

Overall, the suppression of Cl. perfringens growth with Barley Malt is in accordance with the observed improvement of feed conversion ratio (FCR) during the 35-day trial. Therefore, the results of this study strongly suggest that Barley Malt inclusion in the diet holds much promise as an efficient inhibitor of Cl. perfringens infection during the severe phase of necrotic enteritis.

**V. "Malted grain" as a health feed product for horses - digestibility and glucose response of horses to malted barley (not according to the invention)**

**1. Material and Methods**

1.1 Horses and diets

Six sedentary Finnhorse (mesomorphic type) mares, 6 to 14 years old, weighing $617 \pm 41.9$ kg, were selected for the trial. The horses were individually housed in a box stall with peat bedding and feeding racks designed for precise feeding. Horses were weighted at the beginning of the trial and on Thursdays during the collection week. During the trial horses were allowed to exercise in a paddock, 2 hours daily.

The experimental feed was malted barley which palatability, digestibility and metabolic effects were compared with the regular rolled barley and the most common grain used for horses, oats. In addition, dry hay was fed for all of the horses. Feed allowance was calculated individually for every horse according to the dry matter content of the feeds and live weight of the horse. The diets were designed to meet a daily allowance of 70 g DM/kg, of which 35% consisted of grain and 65% from dry hay. Finnish feeding recommendations for sedentary horses were used as a guideline for calculation (Feed tables and feeding recommendations, MTT 2014). Horses were fed three times per day and consumption of feed was recorded by weighing the offered and refused feed throughout the experiment. A commercial mineral mixture (Ca:P=2:1) was fed at a rate of 130 to 150 g/day during days 1-13 of each period. Water and salt blocks (NaCl) were freely available. Daily grain and hay rations were weighed and packed in plastic containers or buckets and left waiting for the feeding. Representative feed samples for analyses were taken during the collection period and stored at a room temperature.

1.2 Experimental procedure

*1.2.1 Digestibility*

The 9-week trial had three periods and the length of each period was 21 days. Periods consisted of 4.5 days for diet change, 12 days of acclimation and 4 days of sample collection. On the last day (0.5 days) of each period a glucose response test was conducted.

The in vivo apparent digestibility of the diets was measured with horses by a digestibility marker method. Acid insoluble ash (AIA), which is a natural ingredient in the feed, was used as a digestibility marker. The amount of an indigestible marker voided in faeces, when fed continuously over time, is constant. The concentration of the marker in faeces directly relates to faeces output (Equation 1). The digestibility of the diet and specific nutrients can then be calculated when feed intake and faeces output are known (Equation 2).

Faecal DM (kg/d) output based on the marker method was calculated as follows:

$$\frac{\text{Feed AIA concentration (mg/kg DM)}}{\text{Faecal AIA concentration (mg/kg DM)}} \times \text{DM intake (kg/d)} \qquad (1)$$

Total tract apparent in vivo digestibility coefficients were calculated as follows:

$$\frac{\text{Component consumed in feed (g/d) – Component excreted in faeces (g/d)}}{\text{Component consumed in feed (g/d)}} \qquad (2)$$

The faeces samples were taken several (3-4) times a day during working hours. The samples were taken from fresh piles of faeces carefully avoiding its contamination with the bedding material or feed. Also, faeces that had been contaminated with urine was avoided. Faeces samples were stored in a sealed plastic container during the collection period and sent to the laboratory for analysis after the period. Offered and refused feed were recorded daily, and feed refusals were sampled and analysed for dry matter.

*1.2.2 Intravenous glucose response test (IVGRT)*

Intravenous glucose response test was performed on the last day (Friday) of each period. On Thursday afternoon, day prior to IVGRT, horses were restrained in stocks and sedated with for the jugular vein catheter insertion. Catheter (Milacath 14G $\times$ 13 cm, Mila International, Kentucky, USA) was inserted into jugular vein using a local anesthetic (2% lidocaine, Lidocain 20 mg/mL, Orion Pharma, Turku, Finland) blockade. Finally, the catheters with 3-way valves were heparinized and sutured to skin.

In the following morning, after 10 h fasting, the function of the catheters was checked and the first sample (baseline) drawn before feeding. The feeding started at 6:30 for the first two horses and then after five minutes the second pair and again after five minutes the last two. Only a grain portion (1.7 kg) was given - no hay. Eight blood samples were drawn in every 15 minutes (+15,+30,+45, +60,+75,+90,+105,+120) starting from the start of the feeding and after that another six samples in every 30 minutes (+150,+180,+210,+240,+270, +300). With this procedure, the last sample was taken five hours after the grain feeding started and the total number of samples was 15. The catheters were removed after the last sample.

Blood samples were collected into tubes (Vacuette®; Greiner Bio-One International GmbH, Austria) containing potassium oxalate and sodium fluoride for analysis of plasma glucose and lactate, and into tubes without additives for analysis of serum insulin. The tubes were kept at room temperature for one hour before centrifuging at 3000 $\times$ g for 10 minutes. The serum and plasma were stored in plastic tubes at -70°C until analysis for concentrations of glucose, insulin and lactate in Movet Laboratory Ltd, Kuopio, Finland.

Glucose analysis was performed with a spectrophotometric method based on glucose hexokinase according to IFCC standard. Plasma lactate was determined with enzymatic-photometric method. Serum insulin was determined in duplicate by use of commercially available radioimmunoassay (RIA).

*1.2.3 Experimental model and statistical analyses*

The six horses were randomly allocated in treatments in a repeated 3 $\times$ 3 Latin square design (Table 11). This experimental model produces six observations for each treatment, but in this case we had to exclude one horse from the last period because of illness and therefore we have one missing value for the Diet 2 (Barley). The treatments were: A) Oats 35% + dry hay 65%, B) Barley 35% + dry hay 65% and C) Malted Barley 35% + dry hay 65%.

Statistical analyses were carried out using the MIXED procedure of the SAS system (SAS 9.3, 2008). The data sets for both animal species were first analysed separately. The response variable (Y) was analysed according to the following statistical model: $Y_{ijkl} = \mu + \text{Horse}_i + \text{Period}_j + \text{Square}_k + \text{Diet}_l + \varepsilon_{ijkl}$. The effect of square was not statistically significant and it was eventually left out from the model.

**Table 11.** Treatments of six horses.

| | Square I | | | Square II | | |
|---|---|---|---|---|---|---|
| Period | Horse 1 | Horse 2 | Horse 3 | Horse 4 | Horse 5 | Horse 6 |
| I | A | B | C | C | A | B |

(continued)

| | Square I | | | Square II | | |
|---|---|---|---|---|---|---|
| Period | Horse 1 | Horse 2 | Horse 3 | Horse 4 | Horse 5 | Horse 6 |
| II | B | C | A | B | C | A |
| III | C | A | B | A | B | C |

*1.2.4 Chemical analyses*

The DM content of grain, hay and faecal samples was determined by drying at 105 °C for 20 h. For chemical analyses, the samples were dried at 60 °C until dry and milled through a 1-mm sieve. The sample was ashed at 600 °C for 2 h (AOAC, 1990; method 942.05) and the organic matter (OM) concentration was calculated as DM - ash.

The feed samples were analysed for nitrogen by the Dumas method using a Leco FP 428 nitrogen analyser (Leco Corp., St Joseph, USA) (AOAC, 1990; method 968.06) and faecal samples with accredited In-house methods 1120, 1122 and 1125 Kjeldahl; Official method AOAC-984.13 (AOAC, 1990) using Cu as a digestion catalyst and using Foss Kjeltec 2400 Analyzer Unit (Foss Tecator AB, Höganäs, Sweden). Crude protein (CP) was calculated by multiplying N by 6.25. Crude fibre (CF) was determined with a Fibertech 2023 FiberCap system (Foss Tecator Ltd, Häganäs, Sweden) (EEC 92/89, ASN 3802). Neutral detergent fibre (NDF) was analysed according to Van Soest et al. (1991), while for acid detergent fibre (ADF) the method of Robertson and Van Soest (1981) was applied. All samples were analysed for acid insoluble ash (AIA) by method described in EU Commission Directive 71/250/EEC (European Commission 1971). Measurement of pH from the faecal samples was made with Mettler Toledo 345 pH meter (Mettler-Toledo AG, Schwerzenbach, Switzerland).

**2 Results**

2.1 Chemical composition

Chemical composition of the experimental feeds is presented in Table 12. The dry hay which was used for basal feeding represented typical nutritional values for early cut timothy hay. The crude protein (CP) content was low (7.8 %), but can be considered normal for hays produced for horse feeding purposes. The hay had high organic matter (OM) content, low ash and fiber content and good hygienic quality. The palatability of the hay was good.

The chemical composition of the grains was quite similar between crude fiber in the two barleys but malted barley contained slightly less neutral detergent fiber (NDF) and more CP. Oats and barley had similar CP content but oats contained much more fiber (CF, NDF, ADF) and ash.

**Table 12.** Chemical composition of the feeds

| Feed | DM | OM | Ash | CP | CF | NDF | ADF |
|---|---|---|---|---|---|---|---|
| | % | g/kg DM | g/kg DM | g/kg DM | g/kg DM | g/kg DM | g/kg DM |
| Dry hay | 85.6 | 949.7 | 50.3 | 77.6 | 318.8 | 599.4 | 315.5 |
| Oats | 86.2 | 967.0 | 33.0 | 104.3 | 103.2 | 280.0 | 119.1 |
| Barley | 87.3 | 974.1 | 25.9 | 109.0 | 44.7 | 180.3 | 40.8 |
| Malted barley | 91.5 | 976.2 | 23.8 | 123.8 | 48.1 | 152.2 | 47.6 |

2.2 Digestibility

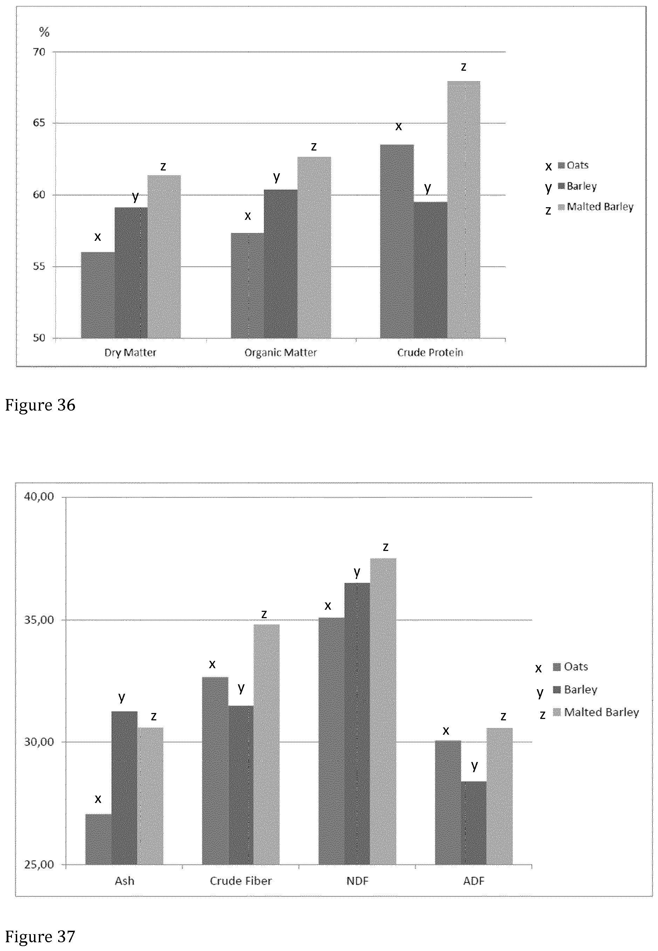

The highest values for total tract nutrient digestibility were achieved with diets containing malted barley. The digestibility values for dry matter, organic matter and crude protein are presented in **Figure 36.** Replacing oats or barley with malted barley enhanced the digestibility of dry matter by 3 - 5 percentage units, organic matter by 3 - 5 units and crude protein by 4 - 8 units.

In addition to the smaller fiber content of malted barley compared to the other examined grains, the fiber fraction was also better digested in diets containing malted barley (**Figure 37**). However, this difference was not statistically significant. When oats was replaced with barley and then with malted barley, we achieved a linear improvement of diet NDF digestibility. Crude fiber digestibility was also markedly improved by replacement with malted barley. Digestibility of ADF was also enhanced from that of regular barley but not when compared to oats.

The model based estimates of digestibility coefficients with statistical significance are presented in Table 13. There was one missing value for Diet 2 in the last period, because one of the horses had to be removed from the experiment. This affected the statistical analysis and made it more difficult to achieve statistical significance due to the small dataset. Although the digestibility of all nutrients was numerically improved with malted barley diets, the only statistically significant digestibility improvements were those for dry matter, organic matter and crude protein ($P<0.05$). Also, the large variation within diet fibre digestibility values weakened the power of statistical analysis and we were not able to detect significance. However, the correlation between organic matter digestion and fibre digestion was highly significant in our dataset.

**Table 13.** Estimated digestibility coefficients of different diets and pH for faeces excreted with the diets.

| | Oats | Barley | Malted Barley | S.E. | Oats vs. Barley | Oats vs. Malted Barley |
|---|---|---|---|---|---|---|
| Dry matter, g/kg | 572.1 | 606.0 | 625.3 | 1.19/1.28* | ns | ** |
| Organic Matter, g/kgDM | 587.6 | 620.2 | 640.5 | 1.21/1.30* | ns | ** |
| Crude Protein, g/kgDM | 695.0 | 655.1 | 739.7 | 2.09/2.22* | ns | ** |
| Crude Fiber, g/kgDM | 332.5 | 325.3 | 354.0 | 2.16/2.36* | ns | ns |
| NDF, g/kgDM | 372.5 | 392.7 | 396.5 | 2.21/2.37* | ns | ns |
| ADF, g/kgDM | 329.1 | 320.1 | 333.2 | 2.78/2.98* | ns | ns |
| Ash, g/kgDM | 270.7 | 314.0 | 305.9 | 1.66/1.84* | ns | ns |
| pH | 6.73 | 6.30 | 6.50 | 0.177/0.18 9* | ns | ns |
| *Standard error for diets 1 and 3/diet 2. Difference in the values due to one missing observation for Diet 2. | | | | | | |

The improved diet digestion with malted barley was due to the higher protein and lower fiber content of the malted barley and better digestibility of these fractions in malted barley grain. This means that needed energy and nutrient concentration of the diet is achieved with smaller grain portion. Malted barley diet resulted in higher pH in faeces compared to barley diet, but did not reach the higher values obtained with oats diet. The differences in pH were not statistically significant. The palatability of malted barley was good. All the individual horses in the trial consumed malted barley without any hesitation.

2.3 Diet effect on blood metabolites

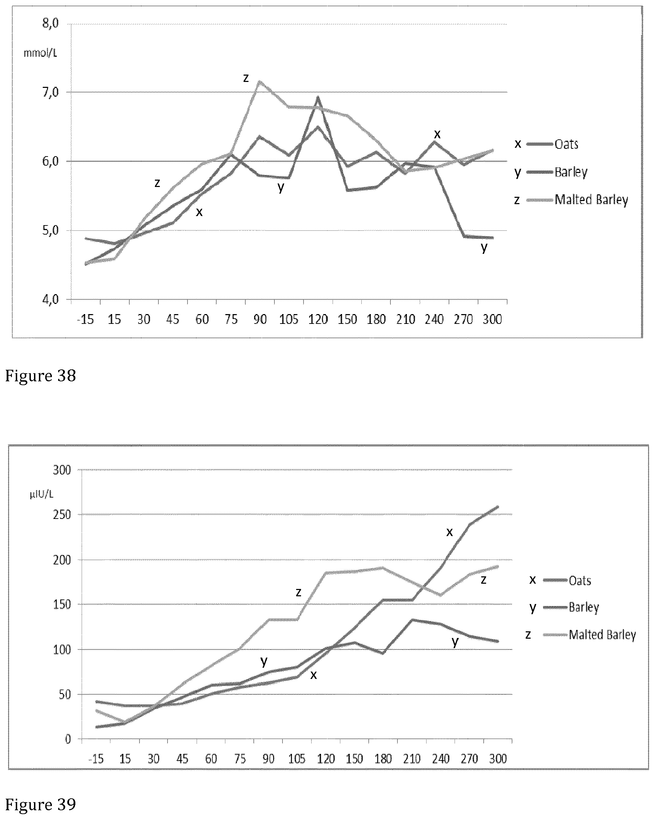

Malted barley was responsible for faster (90 min vs. 120 min) rise in blood glucose level after feeding grain portion of the diet (**Figure 38**). The peak value (7,16 mmol/l) was also higher compared to the other diets (barley 6,92 and oats 6,49 mmol/l). Malted barley kept the higher glucose level (>6 mmol) longer compared to the other diets. In average the duration of higher blood sugar was 120 min for malted barley, 45 min for barley and 30 min for oats.

The blood insulin concentration is basically a reflection of glucose since insulin is important blood glucose regulator. When the concentration of blood glucose rises, insulin secretion starts and signals body cells (muscle, adipose) to take in glucose for energy. Insulin also has several effects in liver which stimulate glycogen synthesis from glucose. The insulin concentration for malted barley was higher during the first 210 minutes for the test (**Figure 39**). When the glucose level dropped in the latter part of the test, it happened also to the insulin concentration. The same development was seen with barley, only the concentration remained lower level. The insulin concentration with oats continued to rise throughout the whole test. This was surprising. Based on the very high insulin values in some of the horses, these individuals were suffering from insulin resistance (IR) which is a metabolic disorder resembling Diabetes form II in humans.

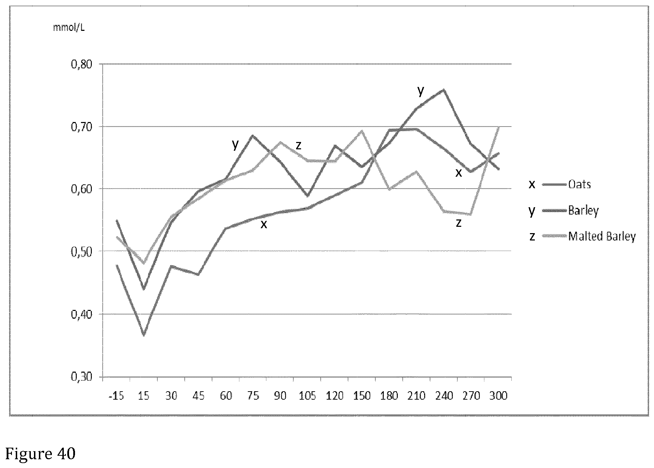

Blood lactate levels were very low during the whole test (**Figure 40**). Blood lactate levels started to rise slowly after 15 minutes post feeding and for barley and malted barley the concentration plateaued after 75 minutes. For oats, the baseline value was lower, but the rise was faster and the values of barley and malted barley were reached at 105 minutes. Blood lactate in resting horses mainly originates from bacterial metabolites in the large intestine. Therefore, the end part of the curve is the most interesting reflecting the grain portion entering large intestine. After 150 minutes, a drop in the lactate curve of malted barley diet can be seen. At the same time point, lactate concentration for barley and oats continued rising. This can be explained as the effect of enhanced starch digestion of malted barley in small intestine.

Large intestine lactic acid production resulting from grain overload is one of widely acknowledged problems of grain feeding. Since the starch digestibility of barley and oats was inferior compared to malted barley (See **Figure 38**) more starch is entering large intestine resulting lactic acid producing fermentation. Acidic conditions in the cecum and colon are predisposing factors for laminitis and other digestive tract originated problems (Rowe et al. 1994).

## 4 Conclusions

The palatability of malted barley was good for all horses in the experiment. Usually barley is reported as less palatable than oats, but that effect was not seen in this experiment.

The digestibility of dry matter, organic matter and crude protein was better in malted barley diet when compared to the most common grain used for horses, oats. There was a strong correlation between the organic matter and fiber digestibility and the fiber digestion was also enhanced in malted barley diets. Fiber content of the feed is considered to have the biggest effect on the digestibility of a feed. Plant fiber, mostly cell-wall material, is not digested by horse digestive enzymes, but can be to some extent digested by large intestine microorganisms. The cell wall (NDF) portion of feed contains cellulose, hemicellulose and lignin. Acid detergent fiber contains cellulose and lignin. These complex carbohydrates are the most difficult to digest, lignin is considered indigestible and cellulose is only partially digested. In malted barley the proportion of easily digested cell solubles is higher compared to other grains, which has a positive effect on the digestibility. The digestion of fiber fractions, especially the digestion-resistant ADF, was improved in malted barley and improved the overall digestibility of the diet.

Based on the effect of grain meal on the blood metabolites, the small intestine digestive availability and capacity of malted barley starch was improved compared to other grains. Thus, malting is considered an effective method to increase precaecal digestibility of barley. It has been suggested that the upper limit to precaecal starch digestion is 3.5-4.0 g starch/kg BW/meal, but lower intakes (>2 g) are currently recommended to avoid detrimental effects in the digestive tract. With improving starch digestibility larger portions of starch can be safely fed.

In this study, the overall digestibility of malted barley diet was better compared to oat or regular barley diet. Based on the findings in metabolic response of these diets, we also argue that the small intestine starch digestibility is improved in malted barley. This means that malted barley has better nutritive value and its nutrients are much more easily and efficiently utilized compared to oats and barley. The steady blood glucose level for a long time after the ingestion of malted barley meal provides readily available energy to the horse. Effective digestion of malted barley starch in small intestine reduces the risks of grain feeding to a horse e.g. bowel acidosis or laminitis. A steady metabolic state means better welfare for the horse.

Malted barley can be used as a main cereal grain in horse feeding or as a main component in commercial compounded feeds, based on the advantages observed in this study. Thus, formulation of (compounded pelleted) feeds with malted barley is recommendable.

It will be obvious to a person skilled in the art that, as the technology advances, the inventive concept can be implemented in various ways. The invention and its embodiments are not limited to the examples described above but may vary within the scope of the claims.

References:

McCleary, B.V. & McGeough, P. 2015. A comparison of polysaccharide substrates and reducing sugar methods for the measurement of endo-1,4-β-Xylanase. Appl. Biochem. Biotechnol. 177, 1152-1163.

Somogyi, M. (1952). Note on sugar determination. J. Biol. Chem. 195, 19-23. McCleary, B.V. 1991. Measurement of polysaccharide degrading enzymes using chromogenic and colorimetric substrates. Chemistry in Australia, September, 398-401.

## Claims

1. Feed for animals comprising germinated and dried grains having alpha-amylase activity of at least 60 DU/g d.w., specifically 70 to 200 DU/g d.w., more specifically 80 to 150 DU/g d.w. for use in improving intestinal health of poultry during and/or after Eimeria infection.

2. Feed for animals comprising germinated and dried grains having alpha-amylase activity of at least 60 DU/g d.w.,

specifically 70 to 200 DU/g d.w., more specifically 80 to 150 DU/g d.w. for use in reducing Clostridium perfringens infection severity in poultry.

3. Feed for animals comprising germinated and dried grains having alpha-amylase activity of at least 60 DU/g d.w., specifically 70 to 200 DU/g d.w., more specifically 80 to 150 DU/g d.w. for use in improving performance of poultry under conditions of necrotic enteritis challenge.

4. The feed for animals for use according to any one of the previous claims, wherein the feed comprises 0.5 - 100 % (w/w), 0.1 - 50 % (w/w), 0.5 - 50 % (w/w), 1 - 40 % (w/w), 1 - 35 % (w/w), 1 - 20 % (w/w), 1 - 15 % (w/w), 1 - 10 % (w/w) or 1 - 5 % (w/w) germinated and dried grains.

5. The feed for animals for use according to any one of the previous claims, wherein the feed comprises

    a) germinated and dried grains    0,5-30% (w/w),
    b) starter diet or grower diet    70-99,5% (w/w).

6. The feed for animals for use according to any one of the previous claims, wherein the feed comprises minerals, vitamins and/or enzymes.

7. The feed for animals for use according to any one of the previous claims, wherein animals are selected from poultry such as broilers, chickens, turkeys and game birds.

8. The feed for animals for use according to any one of the previous claims, wherein the germinated and dried grains have diastatic power of 500 to 1400 WK/100 g d.w., more specifically 650 to 1300 WK/100 g d.w., most specifically 800 to 1200 WK/100 g d.w.

9. The feed for animals for use according to any one of the previous claims, wherein the grains have the following grain quality:

    protein content % (% mass/mass on dry basis)    9-16.

10. The feed for animals for use according to any one of the previous claims, wherein the grains include cereal grains from one or more cereals selected from the group consisting of barley, wheat, rye, oat.

11. The feed for animals for use according to any one of the previous claims, wherein the grains are in the form of grains, ground, flour, pellets, capsules, crumbles, mash, smash, liquid, extract or any combination thereof.

12. The feed for animals for use according to any one of the previous claims, wherein the grains have been dried with hot air comprising drying in the temperature of about 40-70°C.

**Patentansprüche**

1. Futter für Tiere, das gekeimte und getrocknete Körner umfasst, die Alpha-Amylase-Aktivität von mindestens 60 DU/g TG, spezifisch 70 bis 200 DU/g TG, noch spezifischer 80 bis 150 DU/g TG aufweisen, zur Verwendung bei der Verbesserung der Darmgesundheit von Geflügel während und/oder nach einer Eimeria-Infektion.

2. Futter für Tiere, das gekeimte und getrocknete Körner umfasst, die Alpha-Amylase-Aktivität von mindestens 60 DU/g TG, spezifisch 70 bis 200 DU/g TG, noch spezifischer 80 bis 150 DU/g TG, aufweisen, zur Verwendung bei der Verminderung der Schwere einer Clostridium perfringens Infektion bei Geflügel.

3. Futter für Tiere, das gekeimte und getrocknete Körner umfasst, die Alpha-Amylase-Aktivität von mindestens 60 DU/g TG, spezifisch 70 bis 200 DU/g TG, noch spezifischer 80 bis 150 DU/g TG, aufweisen, zur Verwendung bei der Verbesserung der Leistung von Geflügel unter Bedingungen einer nekrotischen Enteritis-Provokation.

**4.** Futter für Tiere zur Verwendung nach einem der vorhergehenden Ansprüche, wobei das Futter 0,5 bis 100 % (w/w), 0,1 bis 50 % (w/w), 0,5 bis 50 % (w/w), 1 bis 40 % (w/w), 1 bis 35 % (w/w), 1 bis 20 % (w/w), 1 bis 15 % (w/w), 1 bis 10 % (w/w) oder 1 bis 5 % (w/w) gekeimte und getrocknete Körner umfasst.

**5.** Futter für Tiere zur Verwendung nach einem der vorhergehenden Ansprüche, wobei das Futter Folgendes umfasst:

    a)    gekeimte und getrocknete Körner    0,5 bis 30 % (w/w),
    b)    Starterfutter oder Growerfutter    70 bis 99,5 (w/w).

**6.** Futter für Tiere zur Verwendung nach einem der vorhergehenden Ansprüche, wobei das Futter Mineralien, Vitamine und/oder Enzyme umfasst.

**7.** Futter für Tiere zur Verwendung nach einem der vorhergehenden Ansprüche, wobei die Tiere von Geflügel, wie beispielsweise Hähnchen, Hühnern, Puten und Federwild, ausgewählt werden.

**8.** Futter für Tiere zur Verwendung nach einem der vorhergehenden Ansprüche, wobei die gekeimten und getrockneten Körner eine diastatische Kraft von 500 bis 1400 WK/100 g TG, spezifischer 650 bis 1300 WK/100 g TG, am spezifischsten 800 bis 1200 WK/100 g TG, aufweisen.

**9.** Futter für Tiere zur Verwendung nach einem der vorhergehenden Ansprüche, wobei die Körner die folgende Kornqualität aufweisen:
Proteingehalt % (% Masse/Masse auf Trockenmasse) 9 bis 16.

**10.** Futter für Tiere zur Verwendung nach einem der vorhergehenden Ansprüche, wobei die Körner Getreidekörner von einem oder mehreren Getreiden umfassen, die ausgewählt sind aus der Gruppe, die besteht aus Gerste, Weizen, Roggen, Hafer.

**11.** Futter für Tiere zur Verwendung nach einem der vorhergehenden Ansprüche, wobei die Körner in der Form von Körnern, Zermahlenem, Mehl, Pellets, Kapseln, Streuseln, Brei, Bruch, Flüssigkeit, Extrakt oder einer beliebigen Kombination davon vorliegen.

**12.** Futter für Tiere zur Verwendung nach einem der vorhergehenden Ansprüche, wobei die Körner mit Heißluft getrocknet wurden, das Trocknen bei einer Temperatur von etwa 40 bis 70 °C umfasst.


**Revendications**

**1.** Aliment pour animaux comprenant des graines germées et séchées ayant une activité d'alpha-amylase d'au moins 60 DU/g de poids sec, spécifiquement 70 à 200 UD/g de poids sec, plus spécifiquement 80 à 150 UD/g de poids sec, pour une utilisation dans l'amélioration de la santé intestinale des volailles pendant et/ou après une infection par Eimeria.

**2.** Aliment pour animaux comprenant des grains germés et séchés ayant une activité d'alpha-amylase d'au moins 60 DU/g de poids sec, spécifiquement 70 à 200 UD/g de poids sec, plus spécifiquement 80 à 150 UD/g de poids sec, pour une utilisation dans la réduction de la gravité d'une infection par Clostridium perfringens chez des volailles.

**3.** Aliment pour animaux comprenant des grains germés et séchés ayant une activité d'alpha-amylase d'au moins 60 DU/g de poids sec, spécifiquement 70 à 200 UD/g de poids sec, plus spécifiquement 80 à 150 UD/g de poids sec, pour une utilisation dans l'amélioration des performances des volailles dans des conditions de provocation par une entérite nécrosante.

**4.** Aliment pour animaux pour une utilisation selon l'une quelconque des revendications précédentes, lequel aliment comprend 0,5 à 100 % (p/p), 0,1 à 50 % (p/p), 0,5 à 50 % (p/p), 1 à 40 % (p/p), 1 à 35 % (p/p), 1 à 20 % (p/p), 1 à 15 % (p/p), 1 à 10 % (p/p) ou 1 à 5 % (p/p) de graines germées et séchées.

**5.** Aliment pour animaux pour une utilisation selon l'une quelconque des revendications précédentes, lequel aliment comprend

| | | |
|---|---|---|
| a) | des graines germées et séchées | 0,5 à 30 % (p/p), |
| b) | un aliment de démarrage ou un aliment de croissance | 70 à 99,5 % (p/p). |

6. Aliment pour animaux pour une utilisation selon l'une quelconque des revendications précédentes, lequel aliment comprend des minéraux, des vitamines et/ou des enzymes.

7. Aliment pour animaux pour une utilisation selon l'une quelconque des revendications précédentes, dans lequel les animaux sont choisis parmi les volailles telles que les poulets à griller, les poulets, les dindes et le gibier à plumes.

8. Aliment pour animaux pour une utilisation selon l'une quelconque des revendications précédentes, dans lequel les graines germées et séchées ont un pouvoir diastasique de 500 à 1400 WK/100 g de poids sec, plus spécifiquement 650 à 1300 WK/100 g de poids sec, le plus spécifiquement 800 à 1200 WK/100 g de poids sec.

9. Aliment pour animaux pour une utilisation selon l'une quelconque des revendications précédentes, dans lequel les graines ont la qualité de graine suivante :
% de teneur en protéines (% en masse/masse sur une base sèche) : 9 à 16.

10. Aliment pour animaux pour une utilisation selon l'une quelconque des revendications précédentes, dans lequel les graines comprennent les graines de céréales issues d'une ou plusieurs céréales choisies dans le groupe constitué par l'orge, le blé, le seigle, l'avoine.

11. Aliment pour animaux pour une utilisation selon l'une quelconque des revendications précédentes, dans lequel les graines sont sous la forme de graines, produit moulu, farine, croquettes, capsules, miettes, purée, produit écrasé, liquide, extrait, ou l'une quelconque de leurs combinaisons.

12. Aliment pour animaux pour une utilisation selon l'une quelconque des revendications précédentes, dans lequel les graines ont été séchées à l'air chaud, cette opération comprenant un séchage à une température d'environ 40 à 70°C.

Figure 1

Figure 2

Figure 3a

Figure 3b

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

Figure 20

Figure 21

Figure 22A

Figure 22B

Figure 22C

Figure 23A

Figure 23B

Figure 24

Figure 25A

Figure 25B

Figure 26A

Figure 26B

Figure 26C

Figure 27A

Figure 27B

Figure 27C

Figure 27D

Figure 28A

Figure 28B

Figure 28C

Figure 28D

Figure 29A

Figure 29B

Figure 29C

Figure 29D

Figure 30

Figure 31A

Figure 31B

Figure 31C

Figure 31D

Figure 32

Figure 33

Figure 34

Figure 35

Figure 36

Figure 37

Figure 38

Figure 39

Figure 40

## REFERENCES CITED IN THE DESCRIPTION

**Patent documents cited in the description**

- US 4251630 A, Pratt
- US 6036431 A, Bae

**Non-patent literature cited in the description**

- **WETTSTEIN et al.** *PNAS,* 2000, vol. 97 (25), 13512-13517
- **TIWARI ; AWASTHI.** *J Food Sci Technol,* 2014, vol. 51 (9), 2256-2259
- **OKOH et al.** *Journal of the Science of Food and Agriculture,* 1989, vol. 49 (3), 271-279
- **MCCLEARY, B.V. ; MCGEOUGH, P.** A comparison of polysaccharide substrates and reducing sugar methods for the measurement of endo-1,4-β-Xylanase. *Appl. Biochem. Biotechnol.,* 2015, vol. 177, 1152-1163
- **SOMOGYI, M.** Note on sugar determination. *J. Biol. Chem.,* 1952, vol. 195, 19-23
- **MCCLEARY, B.V.** Measurement of polysaccharide degrading enzymes using chromogenic and colorimetric substrates. *Chemistry in Australia,* 1991, 398-401